(19) Europäisches Patentamt
European Patent Office
Office européen des brevets

(11) EP 2 688 135 A1

(12) **EUROPEAN PATENT APPLICATION**
published in accordance with Art. 153(4) EPC

(43) Date of publication:
22.01.2014 Bulletin 2014/04

(21) Application number: 12757135.4

(22) Date of filing: 13.01.2012

(51) Int Cl.:
*H01M 10/44* (2006.01)   *H01M 4/525* (2010.01)
*H01M 10/052* (2010.01)

(86) International application number:
PCT/JP2012/000182

(87) International publication number:
WO 2012/124244 (20.09.2012 Gazette 2012/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.03.2011 JP 2011057896

(71) Applicant: Panasonic Corporation
Osaka 571-8501 (JP)

(72) Inventor: TAKEZAWA, Hideharu
Osaka 540-6207 (JP)

(74) Representative: TBK
Bavariaring 4-6
80336 München (DE)

(54) **METHOD FOR CHARGING AND DISCHARGING LITHIUM SECONDARY BATTERY, AND SYSTEM FOR CHARGING AND DISCHARGING LITHIUM SECONDARY BATTERY**

(57)    A charge/discharge method for a lithium secondary battery is performed on a lithium secondary battery including a positive electrode containing a positive electrode active material capable of occluding/releasing lithium ions; a negative electrode containing a negative electrode active material capable of occluding/releasing lithium ions; a separator located between the positive electrode and the negative electrode; and an electrolyte having a lithium ion conductivity. The positive electrode active material contains a lithium-containing transition metal oxide; and a reversible capacity of the negative electrode is larger than a usable capacity of the positive electrode. First charge/discharge is performed by which the positive electrode in a charged state is discharged until having a first potential $VDp1$, which is lower than 2.7 V on a lithium metal basis, and the discharge is finished at this point.

FIG.7

EP 2 688 135 A1

**Description**

## TECHNICAL FIELD

The present invention relates to a charge/discharge method and a charge/discharge system for a lithium secondary battery.

## BACKGROUND ART

Lithium secondary batteries have a large capacity and a high energy density and are easy to be decreased in size and weight, and therefore are widely used as power supplies of small-sized mobile electronic devices, for example, mobile phones, personal digital assistants (PDAs), laptop personal computers, camcorders, portable game machines and the like. In the future, such small-sized mobile electronic devices are desired to have a larger number of functions and to be drivable for a longer time.

In order to attain a further increase in the capacity of lithium secondary batteries, development of active materials is under way. As positive electrode active materials, lithium-containing transition metal oxides, for example, are used. Known lithium-containing transition metal oxides include lithium-containing complex oxides such as, for example, lithium cobalt oxide ($LiCoO_2$) and lithium nickel oxide ($LiNiO_2$) having a layer structure, lithium manganese spinel ($LiMn_2O_4$) having a spinel structure, and the like.

Among such lithium-containing complex oxides, nickel-based lithium-containing complex oxides such as $LiNiO_2$ and the like have a large reversible capacity (180 to 200 mAh/g) in a voltage range that is used for $LiCoO_2$, and is capable of occluding/releasing a larger amount of lithium than $LiCoO_2$. Therefore, use of $LiNiO_2$ realizes a lithium secondary battery having a larger capacity while minimizing a side reaction such as decomposition of an electrolyte solution or the like. However, there is a problem that a lithium secondary battery using $LiNiO_2$ has a short charge/discharge cycle life due to the low stability of the crystalline structure of $LiNiO_2$. Patent Document 1 proposes using a positive electrode active material having a part of Ni of $LiNiO_2$ substituted with another element such as cobalt (Co), aluminum (Al) or the like in order to stabilize the crystalline structure of a lithium nickel oxide.

In the meantime, as negative electrode active materials, alloys and compounds containing silicon, tin and the like have been developed in addition to carbon materials. These materials occlude/release a large amount of lithium. Such a material is largely changed in the volume when being expanded and contracted, and therefore is freed from a current collector when charge/discharge is repeated. When this occurs, electron conductivity is not provided, which may undesirably decrease the capacity and also cause lithium metal to be deposited on the current collector. When lithium metal is deposited, the heat resistance of the battery may be possibly decreased.

Non-patent Document 1 proposes that a lithium secondary battery including $LiNiO_2$ as a positive electrode active material is charged/discharged while the amount of lithium to be occluded/released to/from $LiNiO_2$ is restricted. Non-patent Document 1 specifically describes that when the charge/discharge is performed in a range in which y is 0.15 < y < 0.75 where the lithium nickel oxide is represented by $Li_{1-y}NiO_2$, the resistance against the charge transfer can be decreased. However, when the amount of lithium to be occluded/released to/from the positive electrode active material is decreased, neither the capacity nor the long-term cycle life can be improved although a certain effect of improving the reversibility is provided.

## CITATION LIST

### PATENT LITERATURE

Patent Document 1: Japanese Laid-Open Patent Publication No. 8-213015

### NON-PATENT LITERATURE

Non-patent Document 1: Journal of Power Sources 54 (1995) 209-213

## SUMMARY OF INVENTION

### TECHNICAL PROBLEM

When the positive electrode active material proposed in Patent Document 1 is used, the irreversible capacity of the positive electrode active material is decreased and thus the charge/discharge cycle characteristic is improved. However, even when such a positive electrode active material is used, if the irreversible capacity of the negative electrode is large, the potential of the negative electrode rapidly rises before the potential of the positive electrode rapidly falls. At the point of the rapid rise in the potential of the negative electrode, the discharge is finished (negative electrode potential regulation). When the discharge end is regulated by the potential of the negative electrode in this manner, the reversible capacity of the positive electrode active material cannot be sufficiently utilized. Namely, the ratio of a part of the reversible capacity of the positive electrode active material usable as the battery capacity is decreased.

It is conceivable to have the negative electrode occlude a prescribed amount of lithium in advance before the start of the charge/discharge to increase the usable capacity of the positive electrode so that the battery capacity is increased. The expression "have the negative electrode occlude lithium in advance" means that in a process for producing a lithium secondary battery, the negative electrode (negative electrode active material) is caused to occlude lithium before the negative electrode and the positive electrode are located to face each other while having a separator therebetween to form an electrode group.

When the usable capacity of the positive electrode active material is increased in this manner, a part of the reversible capacity of the negative electrode that is usable by the charge/discharge (negative electrode utilization factor) is increased. However, the studies made by the present inventor found a problem that when the negative electrode utilization factor is increased, the negative electrode becomes easily deteriorated by the repetition of the charge/discharge cycles. This problem will be described in detail later. As can be seen from the above, it is conventionally difficult to provide both of a high charge/discharge cycle characteristic and a large capacity. Herein, $LiNiO_2$ is used as an example of positive electrode active electrode. Substantially the same problem may occur when another lithium-containing transition metal oxide is used.

The present invention, made in light of the above-described situation, has an object of, in a lithium secondary battery using a lithium-containing transition metal oxide as a positive electrode active material, realizing a large capacity while suppressing decrease in the charge/discharge cycle characteristic.

## SOLUTION TO PROBLEM

A charge/discharge method for a lithium secondary battery is performed on a lithium secondary battery including a positive electrode containing a positive electrode active material capable of occluding/releasing lithium ions; a negative electrode containing a negative electrode active material capable of occluding/releasing lithium ions; a separator located between the positive electrode and the negative electrode; and an electrolyte having a lithium ion conductivity. The positive electrode active material contains a lithium-containing transition metal oxide; and a reversible capacity of the negative electrode is larger than a usable capacity of the positive electrode; The charge/discharge method includes first charge/discharge by which the positive electrode in a charged state is discharged until having a first potential VDp1, which is lower than 2.7 V on a lithium metal basis, and the discharge is finished at this point.

## ADVANTAGEOUS EFFECTS OF INVENTION

According to the present invention, in a charge/discharge method for a lithium secondary battery in which a lithium-containing transition metal oxide is used as a positive electrode active material and an irreversible capacity of a negative electrode is larger than a usable capacity of a positive electrode, the discharge end potential of the positive electrode is set to a potential lower than 2.7 V. According to the charge/discharge method of the present invention, the deterioration specific to the lithium-containing transition metal oxide caused by the repetition of the charge/discharge cycles can be utilized to gradually decrease the negative electrode utilization factor as the charge/discharge cycle repetition proceeds. As a result, the deterioration of the negative electrode (deposition of lithium), which would be otherwise caused by the repetition of the charge/discharge cycles, can be prevented without decreasing the initial battery capacity. Accordingly, the initial battery capacity can be kept high, and the decrease in the battery capacity caused especially by the long-term repetition of the charge/discharge cycles can be suppressed.

## BRIEF DESCRIPTION OF DRAWINGS

[FIG. 1] FIG. 1 shows an example of a charge/discharge potential behavior of a nickel-based lithium-containing complex oxide.

[FIG. 2] FIG. 2 is a cross-sectional view schematically showing a structure of an electron beam vapor deposition device 50.

[FIG. 3] FIG. 3 is a graph showing the relationship between the negative electrode utilization factor and the deterioration ratio of a negative electrode.

[FIG. 4] FIG. 4 is a graph showing the relationship between the negative electrode deterioration ratio and the adhesion strength of a negative electrode active material to a current collector.

[FIG. **5**] FIG. **5** is a graph showing the charge/discharge potentials of electrodes in a conventional lithium secondary battery using a graphite-based negative electrode active material.

[FIG. **6**] FIG. **6** is a graph showing an example of charge/discharge potentials of electrodes in a conventional lithium secondary battery using a silicon-based negative electrode active material.

[FIG. **7**] FIG. **7** is a graph showing an example of charge/discharge behavior of a lithium secondary battery in another embodiment according to the present invention; more specifically showing an example of charge/discharge potentials of electrodes in a lithium secondary battery using a silicon-based negative electrode active material and having the negative electrode occlude lithium in advance.

[FIG. **8**] FIG. **8** is a graph showing an example of charge/discharge behavior of a lithium secondary battery in still another embodiment according to the present invention; more specifically showing charge/discharge potentials of electrodes in a lithium secondary battery using a graphite-based negative electrode active material and having the negative electrode occlude lithium in advance.

[FIG. **9**] FIG. **9** shows charge/discharge curves of $Li_xNi_{0.815}Co_{0.15}Al_{0.035}O_2$.

[FIG. **10**] FIG. **10** shows charge/discharge curves of $Li_xNi_{1/3}Mn_{1/3}Co_{1/3}O_2$.

[FIG. **11**] FIG. **11** is a cross-sectional view schematically showing a structure of a lithium secondary battery in an embodiment according to the present invention.

[FIG. **12**] FIGS. **12(a)** through **12(c)** each schematically show a structure of a lithium secondary battery including a reference electrode.

[FIG. **13**] FIG. **13** is a cross-sectional view schematically showing a structure of another lithium secondary battery in an embodiment according to the present invention.

[FIG. **14**] FIG. **14** is a graph showing a change in the capacity retention ratio of batteries that is exhibited by a charge/discharge cycle test in Example 2.

[FIG. **15**] FIG. **15** shows charge/discharge curves of a cobalt-based lithium-containing complex oxide.

## DESCRIPTION OF EMBODIMENTS

First, the present inventor made various studies on a charge/discharge method and structure for increasing the charge/discharge reversibility and capacity of each of a positive electrode and a negative electrode. The results will be described.

<Correlation between the region of usable potential of the positive electrode and the charge/discharge reversibility>

The present inventors have made active studies on a charge/discharge method for providing both of a large capacity and post-charge/discharge cycle safety by use of a lithium-containing transition metal oxide as a positive electrode active material.

During the studies, it was found that the region of usable potential of a positive electrode active material, in particular on the discharge side, is significantly related to the charge/discharge reversibility. Specifically, it was found that in a charge/discharge context, the charge/discharge reversibility is strongly correlated to the amount of lithium occluded/released to/from the positive electrode active material and also to the discharge end potential on a lithium metal basis. Herein, a nickel-based lithium-containing complex oxide is used as an example of positive electrode active material. Substantially the same tendency may be seen when another lithium-containing transition metal oxide is used.

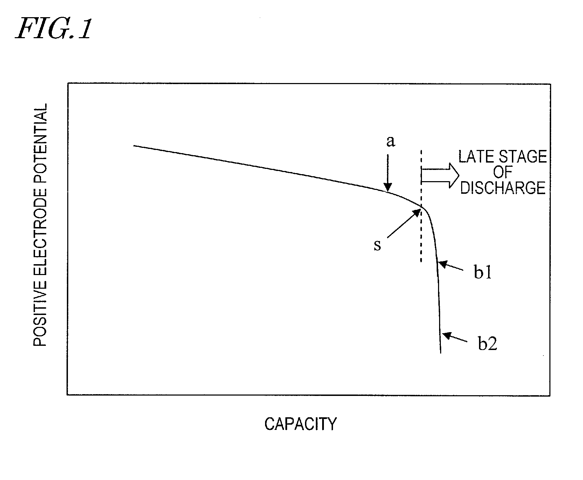

FIG. **1** is a graph showing an example of discharge curve of a positive electrode active material of a lithium secondary battery. The horizontal axis represents the capacity, and the vertical axis represents the potential of the positive electrode active material. As shown in the figure, in a last stage of the discharge, polarization increases because the reaction occlusion of lithium into the positive electrode active material is slowed. Thus, the discharge potential is significantly decreased. In the meantime, the capacity change is very small in the last stage of the discharge.

Through studies of the present inventor, it was found that when the discharge is performed until the discharge potential becomes low (e.g., until the discharge potential reaches potential **b1** or **b2**) in the last stage of the discharge, the positive electrode active material is deteriorated. Especially when the discharge potential becomes lower than potential **b1,** the deterioration of the positive electrode active material is rapidly progressed. This is presumably because the crystalline structure of the lithium-containing complex oxide used as the positive electrode active material is changed. In a positive electrode active material layer containing a lithium-containing complex oxide, there is an undesirable possibility that a new crystalline phase with low reversibility is generated even in the last stage of the discharge when the amount of lithium x locally exceeds 1.0 (x > 1.0). A presumable reason for this is that in a region of the positive electrode defined by a slow occlusion reaction of lithium, a reaction distribution is likely to emerge inside the active material, so that a surface of the active material is put into a more deeply discharged state. It was found that, as a result of this, the active material surface is denatured through the repetition of the charge/discharge cycles and thus an increase in the reaction resistance is promoted.

When the discharge end potential is set to be excessively high (e.g., potential **a**), the discharge is finished before reaching the last stage of the discharge, at which the discharge potential of the discharge curve rapidly falls. When this occurs, a sufficiently large capacity cannot be provided with certainty. Moreover, when the discharge is finished before the potential reaches potential **a**, the following occurs. When the polarization increases due to an increase in the internal resistance along the cycle repetition, the end voltage timing of the battery becomes extremely early due to the potential change being gentle. This results in a conspicuous decrease in the capacity. In order to suppress the decrease in the capacity, the discharge end potential is set to be equal to or below the potential of a point at which the discharge potential rapidly falls (e.g., potential **s**).

Therefore, when attention is paid only to this positive electrode active material (lithium-containing complex oxide), it is considered that in order to suppress the decrease in the charge/discharge reversibility while keeping the capacity large, the discharge end potential is preferably set to a level between potential **b1** and potential **s.** A treason for this is that when the discharge end potential is lower than potential **b1,** the charge/discharge reversibility is decreased; whereas when the discharge end potential is higher than potential **s,** the capacity is decreased.

<Charge/discharge reversibility of the negative electrode, the negative electrode utilization factor, and the adhesiveness of the negative electrode active material>

Next, the present inventor made studies on the relationship between the charge/discharge reversibility of the negative electrode and the amount of lithium occluded/released by the charge/discharge. In this specification, the ratio of the amount of lithium occluded/released to/from the negative electrode by the charge/discharge with respect to the reversible capacity of the negative electrode active material (capacity usable in the range of use of the battery) will be simply referred to as a "negative electrode utilization factor".

It was found that there is a quantitative correlation among the negative electrode utilization factor, the charge/discharge reversibility of the negative electrode active material, and the adhesiveness of the negative electrode active material to the substrate. Specifically, when the negative electrode utilization factor was changed, the charge/discharge reversibility exhibited an exponential change instead of a linear change. In addition, the charge/discharge reversibility and the adhesiveness of the post-evaluation negative electrode active material to the substrate exhibited a strong correlation. In this evaluation, the negative electrode active material was not observed to come off; however, such a phenomenon may undesirably occur in a long-term charge/discharge cycle test. Namely, in order to increase the battery capacity, it is preferable that the negative electrode utilization factor is higher; but when the negative electrode utilization factor is increased, the post-charge/discharge cycle safety may be decreased.

The present inventor produced a negative electrode for evaluation and evaluated the charge/discharge reversibility, the negative electrode utilization factor and the adhesiveness. Hereinafter, the evaluation method and results will be described.

(Production of a negative electrode for evaluation)

On one surface of a negative electrode current collector, an oxide of silicon was vapor-deposited as a negative electrode active material. Thus, a negative electrode active material layer was formed. As the negative electrode current collector, a copper alloy foil having a plurality of convexed portions having a maximum height Rz of about 8 $\mu$m formed at both surfaces thereof was used.

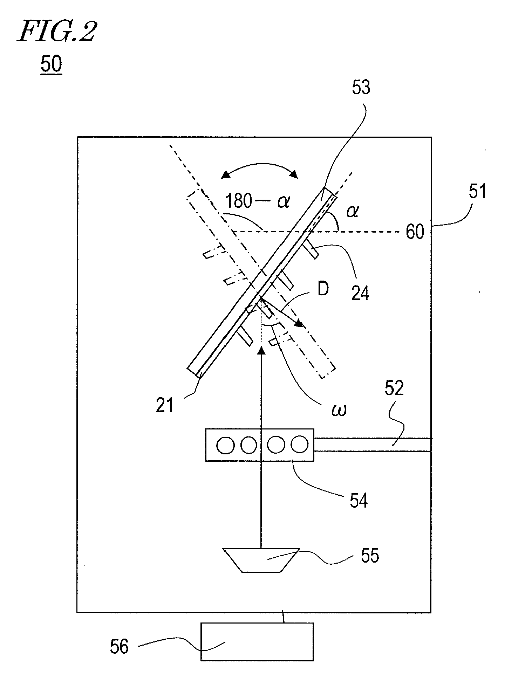

Next, on a surface of the negative electrode current collector obtained above, a negative electrode active material layer was formed by oblique vapor deposition. For forming the negative electrode active material layer, an electron beam vapor deposition device **50** shown in FIG. **2** was used.

The vapor deposition device **50** includes a vacuum chamber **51** and an exhaust pump **56** for exhausting the vacuum chamber **51.** Inside the vacuum chamber **51,** a fixing table **53** for fixing a current collector **21,** a gas introduction pipe **52** for introducing gas into the chamber **51,** and a melting pot **55** having a vaporization source for supplying silicon to a surface of the current collector **21** mounted thereon are installed. As the vaporization source, silicon, for example, is usable. Although not shown, electron beam heating means for vaporizing the material of the vaporization source is provided. The gas introduction pipe **52** includes an oxygen nozzle **54,** and is located such that oxygen gas output from the oxygen nozzle **52** is supplied to the vicinity of the surface of the current collector **21.** The fixing table **53** and the melting pot **55** are located such that vapor deposition particles (herein, silicon atoms) from the melting pot **55** are incident on the surface of the current collector **21** in a direction having an angle (vapor deposition angle) of $\omega$ with respect to the normal direction **D** to the current collector **21.** In this example, the fixing table **53** has a rotation shaft. By rotating the fixing table **53** about the rotation shaft, angle $\alpha$ of the fixing table **53** with respect to a horizontal plane **60** is adjusted to be equal to the prescribed vapor deposition angle $\omega$. Herein, the "horizontal plane" refers to a plane vertical to a direction in which the material of the vapor deposition source mounted on the melting pot **55** is directed toward the fixing table **53** after being gasified.

Hereinafter, a method and conditions for forming a negative electrode active material layer by use of the vapor deposition device **50** will be described.

First, the negative electrode current collector was fixed to the fixing table **53** of the vapor deposition device **50**. The fixing table **53** was set to be located at a first position at which the angle thereof with respect to the horizontal plane would be 60° ($\alpha$ = 60°) (represented by the solid line in FIG. **2**) or at a second position at which the angle thereof with respect to the horizontal plane would be 120° (180 - $\alpha$ = 120°) (represented by the one-dot chain line in FIG. **2**) in a switchable manner. Then, a vapor deposition step was performed 50 times while the position of the fixing table **53** was switched between the first position and the second position. Detailed vapor deposition conditions and materials were as follows.

Source material of the negative electrode active material (vapor deposition source): silicon; purity: 99.9999%; produced by Kojundo Chemical Lab. Co., Ltd.
Oxygen released from the oxygen nozzle **54**: purity: 99.7%; produced by Nippon Sanso Kabushiki Kaisha
Angle $\alpha$ of the fixing table **53:** 60°
Acceleration voltage for electron beams: -8 kV
Emission: 500 mA
Vapor deposition time: 3 minutes $\times$ 50 times

In this manner, the negative electrode active material layer formed of a plurality of column-like active material bodies **24** was formed on one surface of the negative electrode current collector **21.** Thus, the evaluation negative electrode was obtained. The active material bodies **24** were respectively formed on the convexed portions of the negative electrode current collector **21,** and each had a structure including 50 massive column-like bodies stacked sequentially. Each active material body **24** was grown from an apex of the convexed portion and a part of a side surface in the vicinity of the apex, in a direction in which the convexed portion was extended.

Next, the thickness of the negative electrode active material layer in the evaluation negative electrode was found. Herein, a cross-section vertical to the negative electrode current collector in the obtained negative electrode was observed with a scanning electron microscope. Regarding each of 10 active material bodies formed on the surface of the convexed portions, a length from the apex of the convexed portion to an apex of the active material body was measured. An average of the resultant lengths was set as the "thickness of the negative electrode active material layer". The thickness of the negative electrode active material layer was 14 $\mu$m.

The amount of oxygen contained in the active material bodies **24** was quantified by a combustion method. The resultant average composition of the compound forming the active material bodies **24** in the evaluation negative electrode (herein, the compound was an oxide of silicon, i.e., $SiO_2$) was $SiO_{0.25}$ (the average of the oxidation degree z was 0.25). The oxidation degree z indicates the molar ratio of the amount of oxygen with respect to the amount of silicon in the oxide of silicon ($SiO_2$).

Then, the evaluation negative electrode produced by the method described above was caused to pre-occlude lithium. Herein, lithium metal was vapor-deposited on a surface of the negative electrode to supplement lithium in an amount corresponding to an irreversible capacity accumulated in the negative electrode active material layer during the first cycle of charge/discharge. Hereinafter, a method for preocclusion will be described more specifically.

First, lithium metal was put in a boat of tantalum in a chamber of a resistive heating vapor deposition device (produced by ULVAC, Inc.). Next, the evaluation negative electrode was fixed such that the negative electrode active material layer formed on one surface of the evaluation negative electrode would face the boat of tantalum. Then, in an argon atmosphere, a 50 A current was caused to flow through the boat of tantalum to perform vapor deposition on the negative electrode active material layer of the evaluation negative electrode for 10 minutes. Thus, the lithium metal was vapor-deposited.

(Production of an evaluation cell)

A coin-type battery was produced as a cell for evaluation by use of the above-described evaluation negative electrode. For the coin-type battery, Li metal was used for a counter electrode to the evaluation negative electrode.

First, the negative electrode and the counter electrode (Li metal) were located such that the surface of the negative electrode having the negative electrode active material layer formed thereon would face the counter electrode while having a separator therebetween. Thus, an electrode group was obtained. Herein, as the separator, a polyethylene microporous membrane (product name: Hipore; thickness: 20 $\mu$m; produced by Asahi Kasei Corporation) was used.

This electrode group was inserted into an outer case together with an electrolyte solution. Used as the electrolyte was a nonaqueous electrolyte solution obtained by dissolving $LiPF_6$ at a concentration of 1.2 mol/L in a mixed solvent containing ethylene carbonate and ethylmethyl carbonate at a volume ratio of 1:4.

(Conditions for the charge/discharge cycle test)

Next, charge/discharge cycle tests Nos. 1 through 4 were performed on the evaluation cell. In these tests, different voltages were used at the time of constant-voltage charge while the other conditions were the same.

Constant-current charge: 0.8 mA/cm$^2$; end voltage was the voltage at the time of constant-voltage charge shown in Table 1.
Constant-voltage charge: the voltage was as shown in Table 1; end current: 0.2 mA/cm$^2$; pause time: 30 minutes in end mA/cm$^2$;
Constant-current discharge: 0.8 mA/cm$^2$; end voltage: 1.5 V; pause time: 30 minutes

The charge/discharge was repeated 30 times under the above-described conditions. An average discharge efficiency (= discharge capacity/charge capacity $\times$ 100) of the negative electrode of 30 cycles was found. A value obtained by subtracting the resultant average discharge efficiency from 100 was set as the negative electrode deterioration ratio (%). The calculated deterioration ratios are shown in Table 1.

(Measurement of the reversible capacity of the negative electrode)

The discharge capacity when the charge/discharge was performed under the following conditions was found and was set as the reversible capacity of the negative electrode.

Constant-current charge: 0.8 mA/cm$^2$; end voltage: 0 V; pause time: 30 minutes
Constant-current charge: 0.4 mA/cm$^2$; end voltage: 0 V; pause time: 30 minutes
Constant-current charge: 0.08 mA/cm$^2$; end voltage: 0 V; pause time: 30 minutes
Constant-current discharge: 0.8 mA/cm$^2$; end voltage: 1.5 V; pause time: 30 minutes

In addition, the discharge capacity after the first cycle of the charge/discharge cycle test was found. From these values, the negative electrode utilization factor during an initial stage of the cycle repetition (initial negative electrode utilization factor) was calculated by the following expression. The results are shown in Table 1.

```
            (Initial negative electrode utilization factor) (%)

=   (discharge   capacity   after   the   first   cycle   of   the charge/discharge   cycle   test)/(reversible   capacity   of   the

negative electrode) × 100
```

(Evaluation on the adhesiveness)

After the charge/discharge cycle test was finished, the evaluation cell was disassembled to take out the evaluation negative electrode. This negative electrode was immersed in dimethyl carbonate, then dried, and cut into a prescribed size. A sample thus obtained was bonded to a flat table with the surface on the side of the negative electrode current collector being directed downward, and was fixed. Next, an adhesive tape (produced by Nitto Denko Corporation) was located on the surface of the sample on the side of the negative electrode active material layer. The adhesive tape was located such that an adhesive surface thereof would face the surface of the sample on the side of the negative electrode active material layer, and a force of 400 gf was applied by a $\phi$2 mm flat terminal to press the adhesive tape to the sample. Then, the flat terminal was pulled up in the vertical direction, and the stress [kgf/cm$^2$] when in the negative electrode active material was peeled off from the negative electrode current collector was measured. This stress was set as the adhesion strength and used as an index of the adhesiveness between the negative electrode active material and the current collector. The measurement results of the adhesion strength are shown in Table 1.

[Table 1]

| Test No. | Constant-voltage charge voltage (V) | Negative electrode utilization factor (%) | Negative electrode deterioration ratio (%) | Adhesion strength (kgf/cm$^2$) |
|---|---|---|---|---|
| 1 | 0.2 | 47 | 0.02 | 25.1 |
| 2 | 0.1 | 75 | 0.11 | 22.1 |
| 3 | 0.07 | 85 | 0.25 | 18.9 |
| 4 | 0.005 | 98 | 1.20 | 2.1 |

(Correlation among the negative electrode utilization factor, the negative electrode deterioration ratio and the adhesiveness of the negative electrode active material)

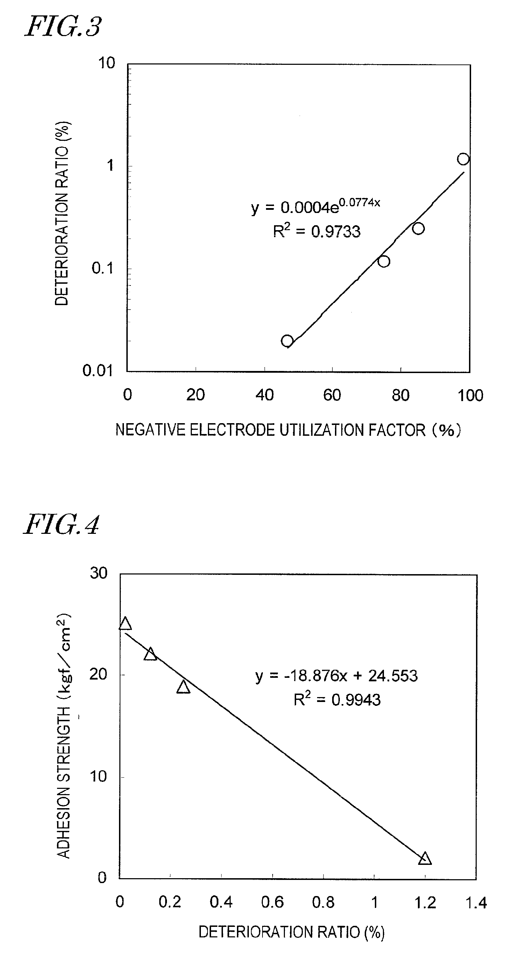

FIG. **3** shows the relationship between the negative electrode utilization factor and the negative electrode deterioration ratio found by the above-described method. FIG. **4** shows the relationship between the negative electrode deterioration ratio and the adhesion strength (adhesion strength between the negative electrode active material and the negative electrode current collector).

It was found from FIG. **3** that the negative electrode utilization factor and the deterioration ratio are in an exponential relationship. As can be seen from FIG. **4**, the negative electrode deterioration ratio and the adhesion strength have a strong linear correlation. From these results, the following is found.

When the negative electrode utilization factor is increased, a volumetric change of the negative electrode active material caused by expansion and contraction thereof is increased. As a result, a stress applied to the interface between the negative electrode active material layer and the current collector is increased. Therefore, the adhesiveness of the negative electrode active material is decreased, which rapidly deteriorates the charge/discharge cycle characteristic. Namely, the deterioration ratio is increased.

By contrast, when the negative electrode utilization factor is decreased, the charge/discharge reversibility of the negative electrode active material is significantly improved, and thus the decrease in the adhesiveness of the negative electrode active material can be prevented. As a result, the negative electrode active material is prevented from coming off from the current collector, and lithium metal is prevented from being deposited, even when the charge/discharge cycle repetition proceeds. Thus, the deterioration ratio is decreased.

From the above, it is understood that when the reversible capacity of the negative electrode is made larger than the usable capacity of the positive electrode (referred to as the "positive electrode capacity regulation"), the negative electrode utilization factor can be suppressed to be lower than 100%, and thus both of a large battery capacity and the charge/discharge reversibility can be provided.

<Battery structure for realizing the positive electrode capacity regulation>

Next, the present inventor made studies on a structure for realizing the positive electrode capacity regulation in a battery using a lithium-containing transition metal oxide for a positive electrode.

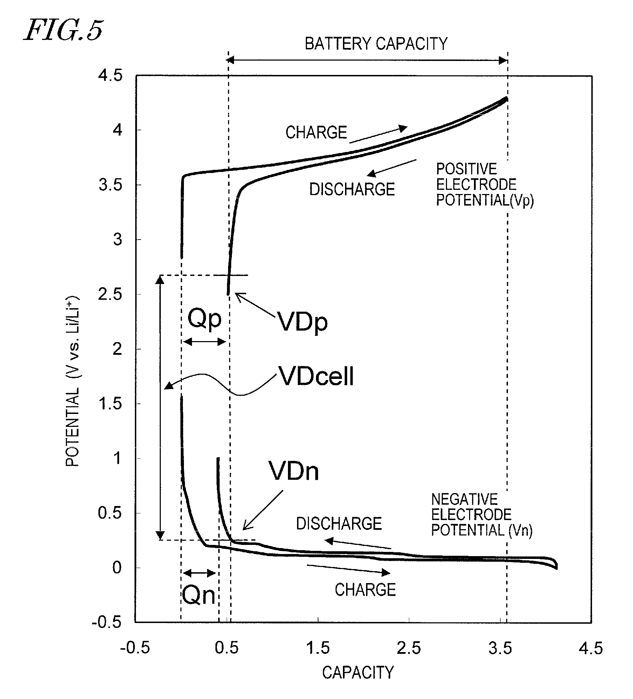

FIG. **5** shows an example of electrode potential behaviors, at the time of charge/discharge, of electrodes in a lithium secondary battery (hereinafter, referred to simply as the "battery") using a nickel-based lithium-containing complex oxide ($Li_xNi_{0.815}Co_{0.15}Al_{0.035}O_2$) as a positive electrode active material and a graphite-based material as a negative electrode active material. The vertical axis represents the potential on a lithium metal basis, and the horizontal axis represents the relative capacity. In FIG. **5,** the positive electrode potential is represented by **Vp,** and the negative electrode potential is represented by **Vn.** The battery voltage Vcell at the time of charge/discharge is represented by a difference between the positive electrode potential and the negative electrode potential (= **Vp - Vn**). FIG. **5** and other figures showing examples of potential behaviors show the potential behaviors when the test temperature is 25°C.

The discharge of the battery is finished when the difference between the positive electrode potential **Vp** and the negative electrode potential **Vn** (i.e., cell voltage Vcell) becomes equal to or lower than a prescribed voltage. In general, which of the positive electrode potential **Vp** and the negative electrode potential **Vn** exerts a stronger influence to finish the discharge (discharge end) is determined by the type of the active materials, the capacity ratio between the positive electrode and the negative electrode, the rate characteristic of the positive electrode and the negative electrode, or the like. The time to finish the discharge is regulated by the electrode for which the point in time when the gradient of the potential with respect to the capacity rapidly increases is earlier during the discharge.

As shown in FIG. **5** as an example, the positive electrode potential **Vp** slowly falls from the start of the discharge and then rapidly drops in a last stage of the discharge. The Negative electrodes potential **Vn** rises very slowly from the start of the discharge. In the last stage of the discharge, the potential change gradually increases, and the negative electrode potential **Vn** rapidly rises.

In this system, before the potential change of the negative electrode potential **Vn** becomes large, the positive electrode potential **Vp** rapidly drops. At this point, the difference between the positive electrode potential **Vp** and the negative electrode potential **Vn** (i.e., cell voltage) becomes equal to or lower than a prescribed voltage, and thus the discharge is finished. Namely, the time to finish the discharge is regulated by the positive electrode. The positive electrode potential at the end of the discharge will be referred to as the "discharge end potential **VDp** of the positive electrode", and the negative electrode potential at the end of the discharge will be referred to as the "discharge end potential **VDn** of the negative electrode". The prescribed voltage will be referred to as the "discharge end voltage **VDcell** of the cell". In this system, the usable capacity of the positive electrode is the battery capacity in a prescribed potential range. The "usable capacity" of the positive electrode is the battery capacity obtained when the battery is charged/discharged at a prescribed charge/discharge voltage, the battery capacity being represented by a value per weight or per surface area ($mAh/cm^2$) of the positive electrode (mAh/g). In FIG. **5**, the capacity obtained by subtracting the discharge capacity from the charge capacity (irreversible capacity) is represented by **Qp** for the positive electrode and by **Qn** for the negative electrode.

In the structure in which the discharge is finished by a rapid change in the discharge potential of the positive electrode on the discharge side, like in the structure of the system shown in FIG. **5**, the capacity of the negative electrode is usually made larger than the capacity to be discharged so that the negative electrode is not overcharged on the capacity charge side. Therefore, in general, in a positive electrode capacity-regulated battery, the battery capacity and the usable capacity of the positive electrode are equal to each other in a prescribed potential range.

In this system, the irreversible capacity **Qp** of the positive electrode is larger than the irreversible capacity **Qn** of the negative electrode. However, even when the irreversible capacity **Qn** of the negative electrode is larger than the irreversible capacity **Qp** of the positive electrode, the positive electrode capacity regulation can be realized by adjusting the weight ratio between the positive electrode and the negative electrode so that the irreversible capacity of the positive electrode is relatively large. A nickel-based lithium complex oxide has a substantive irreversible capacity and thus is advantageous to realize the positive electrode capacity regulation.

By contract, when the irreversible capacity **Qn** of the negative electrode is larger than the irreversible capacity **Qp** of the positive electrode, the time to finish the discharge is mainly regulated by the negative electrode potential **Vn.**

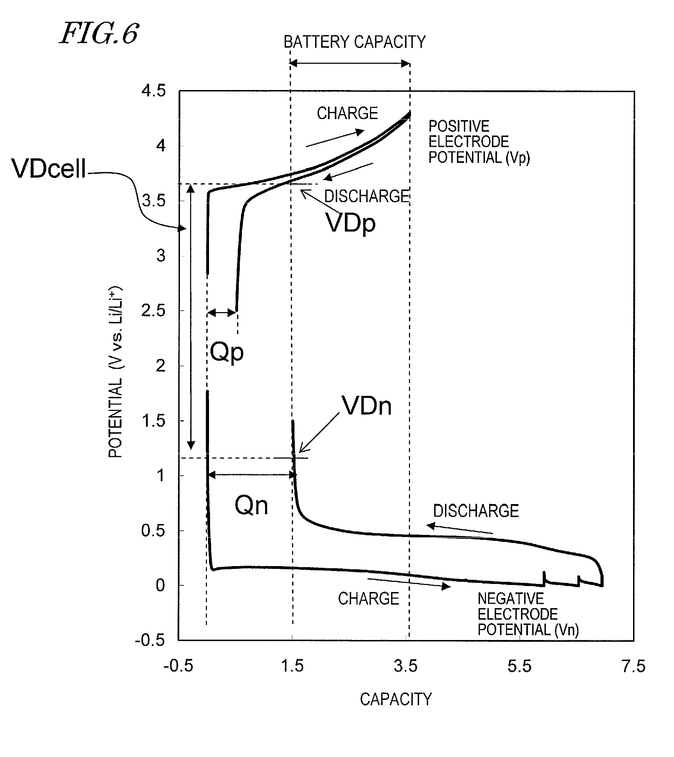

FIG. 6 shows an example of potential behaviors, at the time of charge/discharge, of electrodes in a battery using a nickel-based lithium-containing complex oxide ($Li_xNi_{0.815}Co_{0.15}Al_{0.035}O_2$) as a positive electrode active material and an oxide of silicon ($SiO_z$; x = 0.25) as a negative electrode active material.

In the system shown in FIG. **6,** before the positive electrode potential **Vp** significantly drops, the negative electrode potential **Vn** steeply rises. At this point, the discharge is finished (negative electrode capacity regulation).

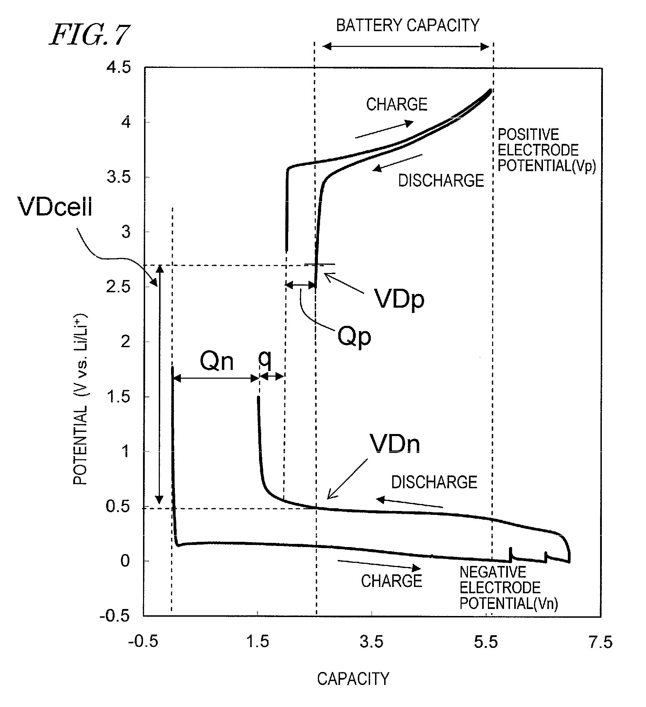

In the case where the irreversible capacity **Q** of the negative electrode is larger as in FIG. **6,** it is preferable to, for example, have the negative electrode occlude a prescribed amount of lithium in advance before the battery is structured. In this case, as shown in FIG. **7,** the potential balance between the positive electrode and the negative electrode of the battery in a last stage of the discharge can be changed. As long as the amount of lithium to be occluded in advance is equal to or larger than the irreversible capacity **Qn** of the negative electrode, the positive electrode capacity regulation can be realized.

In the example shown in FIG. **7,** the negative electrode is caused to occlude lithium in an amount larger than the irreversible capacity **Qn** of the negative electrode (i.e., in an amount of Qn + q) in advance. The excessive amount q of lithium occluded to the negative electrode is a reversible capacity of the negative electrode. In addition, lithium of an irreversible capacity (**Qp**) of the positive electrode is present in the negative electrode in a discharged state. Therefore, in a completely discharged state at 25°C, the amount of lithium releasable from the negative electrode is larger than the irreversible capacity of the battery, namely, the irreversible capacity **Qp** of the positive electrode. Specifically, the negative electrode contains, as movable lithium, lithium in an amount equal to a sum of the excessive amount q of lithium and the irreversible capacity **Qp** of the positive electrode (i.e., the irreversible capacity of the battery).

It is preferable that the amount of lithium to be occluded in advance is larger than the irreversible capacity **Qn** of the negative electrode. The amount of lithium to be occluded in advance in this case is represented as "Qn + q" (q: excessive amount). When the amount of lithium to be occluded in advance is equal to **Qn,** there is an undesirably possibility that by an influence of the potential change in the vicinity of a point at which the negative electrode potential **Vn** rises, the discharge is finished before the discharge potential of the positive electrode rapidly falls. In such a case, the battery capacity is smaller than that in the case where the discharge is finished at the time when the positive electrode potential **Vp** rapidly falls. By contrast, when the amount of lithium to be occluded in advance is larger than **Qn** (q > 0), the discharge can be finished with more certainty at the time when the positive electrode potential **Vp** rapidly drops regardless of the gradient of the potential of the negative electrode in a last stage of the discharge.

Even when a graphite-based material is used as the negative electrode active material (FIG. **5**), it is preferable to have the negative electrode occlude lithium in advance. Having a graphite-based material occlude lithium in advance means making the negative electrode potential lower than the reduction potential of the electrolyte solution in advance. Namely, on a surface of the graphite material, a protective film (SEI: Solid Electrolyte Interface) is formed. In a conventional lithium secondary battery using a graphite-based material, the protective film is formed on the surface of the graphite material at the time of initial charge as a result of decomposition of the electrolyte solution. This causes a problem that cracked gas of the electrolyte solution is generated at the time of initial charge. By contrast, when the protective film is formed by having the negative electrode occlude lithium, the negative electrode is covered with the protective film at the time of initial charge. Therefore, the generation of the cracked gas of the electrolyte solution, which is conventionally caused, can be reduced.

When lithium is occluded to the negative electrode (graphite) in advance, the following advantages are also provided. The studies made by the present inventor found that when a battery using a nickel-based complex oxide as a positive electrode active material is used in a high temperature environment (e.g., equal to or higher than 40°C), the discharge capacity is increased as compared with in the case where the battery is used at 25°C. When lithium is occluded (e.g., in an amount of **Qn** or larger) to the negative electrode in advance, the influence of the rise of the negative electrode potential is suppressed even when the battery is used at a high temperature. Thus, the positive electrode capacity regulation can be realized with more certainty. Therefore, the increase in the capacity realized by the use of the battery at a high temperature can be enjoyed as an increase in the battery capacity. Thus, the battery can have a larger capacity.

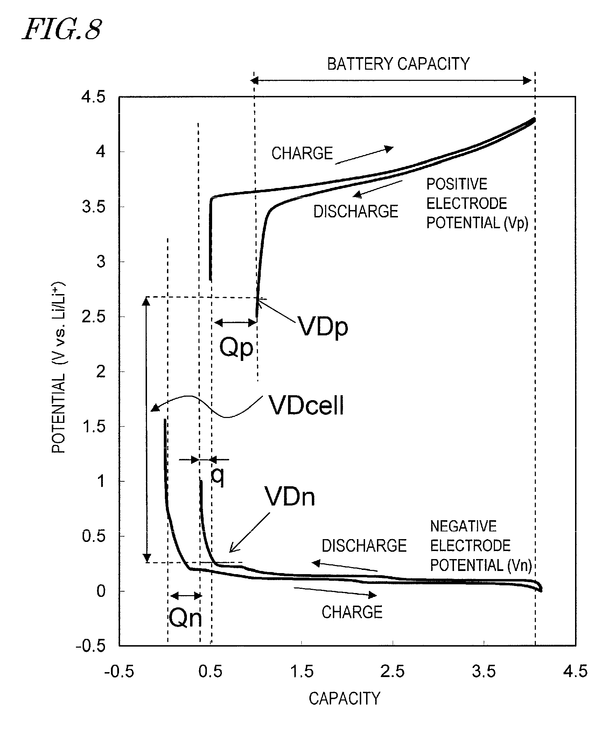

FIG. **8** shows an example of a system using a graphite-based material as a negative electrode active material and having the negative electrode occlude lithium in advance. The amount of lithium to be occluded in advance may be any amount equal to or larger than the irreversible capacity **Qn** of the negative electrode. Herein, lithium is occluded in an amount larger than the irreversible capacity **Qn**.

The graphs in FIG. **5** through FIG. **8** show the potential behaviors when the environmental temperature is 25°C. When the environmental temperature (temperature at which the battery is used) rises (e.g., to 45°C), the discharge potential of the positive electrode is shifted toward the lower capacity side. Even in such a case, when lithium in an amount larger than the irreversible capacity **Qn** of the negative electrode is occluded to the negative electrode in advance (q > 0), the discharge end is not easily influenced by the potential change in the vicinity of the point at which the negative electrode potential rises. Therefore, the discharge can be finished with more certainty at the time when the discharge potential of the positive electrode rapidly falls, regardless of the environmental temperature. Accordingly, the capacity increase of the positive electrode caused by the rise in the environmental temperature can be reflected on the increase in the battery capacity with no loss. Thus, the battery capacity can be increased under a high temperature environment.

When a graphite-based material is used as the negative electrode active material, the amount of lithium to be occluded to the negative electrode in advance is preferably larger than the irreversible capacity **On** of the negative electrode, more preferably at least 1.1 times and further preferably at least 1.5 times the irreversible capacity **Qn** of the negative electrode. In such a case, the influence of the rise of the negative electrode potential on the positive electrode potential can be reduced more effectively. This is especially advantageous when the battery is used at a high temperature because the influence of the rise of the negative electrode potential can be suppressed and the positive electrode capacity regulation can be realized with more certainty. Meanwhile, when the amount of lithium to be occluded to the negative electrode in advance is too large, there is an undesirable possibility that a sufficiently large battery capacity cannot be provided with certainty. When a graphite-based material is used as the negative electrode active material, it is preferable that the amount of lithium to be occluded to the negative electrode in advance is at most 3.0 times the irreversible capacity **Qn** of the negative electrode.

When a silicon-based material is used as the negative electrode active material, the amount of lithium to be occluded to the negative electrode in advance is preferably larger than the irreversible capacity **Qn** of the negative electrode, more preferably at least 1.1 times and further preferably at least 1.3 times the irreversible capacity **Qn** of the negative electrode. In such a case, the influence of the rise of the negative electrode potential on the positive electrode potential can be reduced more effectively. This is especially advantageous when the battery is used at a high temperature because the influence of the rise of the negative electrode potential can be suppressed and the positive electrode capacity regulation can be realized with more certainty. Meanwhile, in order to provide a sufficiently large battery capacity, it is preferable that the amount of lithium to be occluded to the negative electrode in advance is at most twice the irreversible capacity **Qn** of the negative electrode.

<Studies on a structure and a charge/discharge method for realizing both of the charge/discharge reversibility of the battery and a large battery capacity>

Based on the results of studies on each of the positive electrode and the negative electrode described above, the present inventor made studies on a structure and a charge/discharge method for realizing both of the charge/discharge reversibility of the battery and a large battery capacity.

The present inventor obtained the following knowledge: in a lithium secondary battery having such a structure as to realize positive electrode capacity regulation, deterioration of the negative electrode can be suppressed by actively utilizing a potential behavior (FIG. **1**) specific to the lithium-containing transition metal oxide used as the positive electrode active material and thus by gradually restricting the negative electrode utilization factor as the charge/discharge cycle repetition proceeds. Based on this knowledge, the present inventor found that by setting the discharge end potential of the positive electrode to be lower than the potential **b1** (2.7 V) shown in FIG. **1**, the decrease in the charge/discharge reversibility of the battery can be suppressed while a certain level of initial battery capacity is provided with certainty. Thus, the present invention has been made.

When the discharge end potential of the positive electrode is set to be lower than 2.7 V, the positive electrode is increasingly deteriorated and the capacity of the positive electrode (battery capacity) is gradually decreased as the charge/discharge cycle repetition proceeds. In accordance with this, the negative electrode utilization factor is also decreased. Therefore, the amount of lithium as the negative electrode active material to be occluded/released is restricted, and thus the negative electrode active material can be prevented from coming off despite the repetition of the volumetric change of the negative electrode active material. Accordingly, although the positive electrode is increasingly deteriorated, the rapid deterioration of the negative electrode can be suppressed. This improves the charge/discharge reversibility.

In a preferable embodiment of the present invention, in a charge/discharge method for a lithium secondary battery using a lithium-containing transition metal oxide as a positive electrode active material, the discharge potential of the positive electrode is suppressed to be lower than 2.7 V, at which the discharge potential during a last stage of the discharge significantly falls. Owing to this, the decrease in the battery capacity can be minimized. Therefore, a sufficiently large battery capacity is provided with certainty and the post-charge/discharge cycle safety can be improved while a rapid fall in the capacity is avoided. The discharge end potential is preferably controlled to be equal to or higher than 1.8 V (equal to or higher than the potential **b2**). In this case, the rapid deterioration of the Positive electrode active material, caused by the repetition of the charge/discharge, can be suppressed.

In a conventional lithium secondary cell, the time to finish the discharge is determined by the minimum voltage of the device, the potential change of the active material itself, and the amount (capacity) of each of the positive electrode active material and the negative electrode active material. Therefore, conventionally, there is no idea that discharge is finished by controlling the discharge potential of the positive electrode to a prescribed potential (discharge end potential). In addition, it is conventionally not recognized that when a nickel-based lithium-containing complex oxide is used as the positive electrode active material, the charge/discharge reversibility and the range of usable potential on the discharge side are correlated to each other. It is not recognized either that the negative electrode is deteriorated in an exponential manner with respect to the negative electrode utilization factor.

(EMBODIMENT 1)

Hereinafter, Embodiment 1 according to the present invention will be described. This embodiment is directed to a charge/discharge method for a lithium secondary battery including a positive electrode containing a positive electrode active material, a negative electrode containing a negative electrode active material capable of occluding/releasing lithium, a separator located between the positive electrode and the negative electrode, and an electrolyte having a lithium ion conductivity.

The positive electrode active material in this embodiment is a lithium-containing transition metal oxide capable of occluding/releasing lithium. An example of material usable as the positive electrode active material is a complex metal oxide of at least one transition metal selected from cobalt, manganese, nickel, chromium, iron and vanadium, and lithium.

It is preferable to use, as the lithium-containing transition metal oxide, a nickel-based lithium-containing complex oxide, which is a complex metal oxide of nickel and lithium. The nickel-based lithium-containing complex oxide may be an $LiNiO_2$-based material in which a part of Ni is substituted by another element selected from the group consisting of Mg, Sc, Y, Mn, Fe, Co, Ni, Cu, Zn, Al, Cr, Pb, Sb, and B.

Alternatively, a cobalt-based lithium-containing complex oxide, which is a complex metal oxide of cobalt and lithium may be used. As described above with reference to FIG. **1**, any of these positive electrode active materials has the crystalline structure thereof changed and exhibits a potential behavior by which the capacity thereof is rapidly decreased, in a late stage of the discharge. An example of usable cobalt-based lithium-containing complex oxide is $Li_aCoO_2$ (where $1.0 \leq a \leq 1.10$). A part of Co may be substituted with another element for the purpose of improving the cycle characteristic or the thermal stability.

In this embodiment, a surface of the positive electrode active material may be partially or entirely covered with another metal oxide, a hydroxide, a metal salt or the like for the purpose of, for example, reducing an oxidative degradation reaction of the electrolyte solution on the positive electrode active material at a high voltage.

The negative electrode active material in this embodiment may be a graphite-based material such as artificial graphite, natural graphite or the like or an alloy material such as silicon, tin or the like with no specific limitation.

In the battery in this embodiment, the reversible capacity of the negative electrode is larger than the usable capacity of the positive electrode (positive electrode capacity regulation). Therefore, the usable capacity of the positive electrode is the battery capacity.

According to the charge/discharge method in this embodiment, the discharge end potential of the positive electrode at the end of the discharge is controlled to be lower than 2.7 V on a lithium basis.

<Discharge characteristic of the battery using a lithium-containing transition metal oxide>

Now, with reference to the drawings, the discharge characteristic of a battery using a lithium-containing transition metal oxide as the positive electrode active material will be described. In this example, the lithium-containing transition metal oxide is a nickel-based lithium-containing complex oxide.

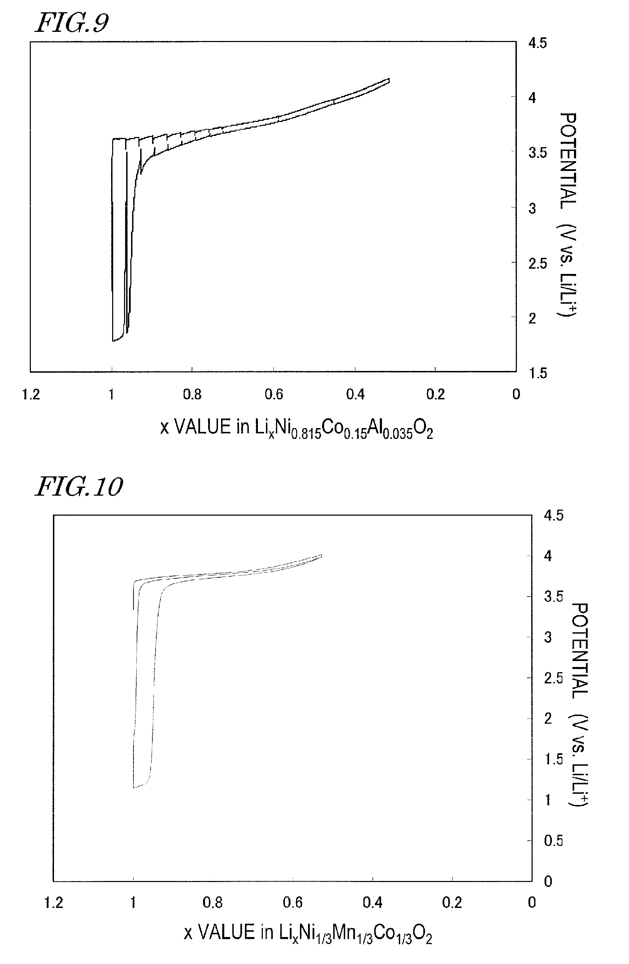

FIG. **9** is a graph showing a typical charge/discharge potential behavior (25°C) of a nickel-based lithium-containing complex oxide. The graph shown in FIG. **9** shows a potential change measured in the case where $Li_xNi_{0.815}Co_{0.15}Al_{0.035}O_2$ was used as the nickel-based lithium-containing complex oxide and the x value was varied in the range of $0.3 \leq x \leq 1.0$.

For the measurement, the nickel-based lithium-containing complex oxide was intermittently charged/discharged with a current density of 0.3 mA/cm$^2$. During the charge/discharge, the current was paused at a constant interval to measure open-circuit potentials. Each pause time was 1 hour. The current application and pause were repeated consecutively, and the potential behavior with respect to the x value was plotted in FIG. **9**. In the graph shown in FIG. **9**, spike-shaped potential changes are seen at a plurality of x values. The changes occurred when the charge/discharge was paused at these x values, and the changes each indicate an open-circuit potential at the corresponding point.

As these results indicate, when the x value is in the range of equal to or larger than 0.3 and smaller than 0.8, the difference between the closed-circuit potential and the open-circuit potential during the charge and discharge is small. However, when the x value is equal to or larger than 0.8, the difference between the closed-circuit potential and the open-circuit potential during the discharge gradually increases, and rapidly increases when the x value becomes, for example, larger than about 0.9. This is presumably because the lithium occlusion to the positive electrode active material is slow and thus appears as polarization. It was found through a crystallography based on X-ray diffraction that a part of the crystalline structure of the positive electrode active material, in a state where lithium is occluded by discharging the battery completely until the x value becomes x = 1.0, is changed into a structure which is different from the crystalline structure of the positive electrode active material before the charge/discharge.

FIG. **10** is a graph showing a charge/discharge potential behavior of $Li_xNi_{1/3}Mn_{1/3}Co_{1/3}O_2$ (25°C). The behavior of $Li_xNi_{1/3}Mn_{1/3}Co_{1/3}O_2$ is similar to the behavior of $LiNi_{0.815}Co_{0.15}Al_{0.035}O_2$ shown in FIG. **9**. Namely, when the x value becomes equal to larger than 0.8, polarization increases in a late stage of the discharge and the potential rapidly drops. Then, the potential curve is kept flat at around 1.2 V until the x value becomes x = 1.0. It was found that in the case where this type of nickel-based lithium-containing complex oxide is used also, once the potential is kept flat, the polarization characteristic is deteriorated thereafter and thus the charge/discharge reversibility is decreased.

It is seen from these study results that a positive electrode active material exhibiting the discharge potential behavior as shown in each of FIG. **9** and FIG. **10** causes a more or less similar phenomenon in a late stage of the discharge and thus the charge/discharge reversibility is decreased. This phenomenon is commonly observed in lithium-containing complex oxides containing Ni As a main component.

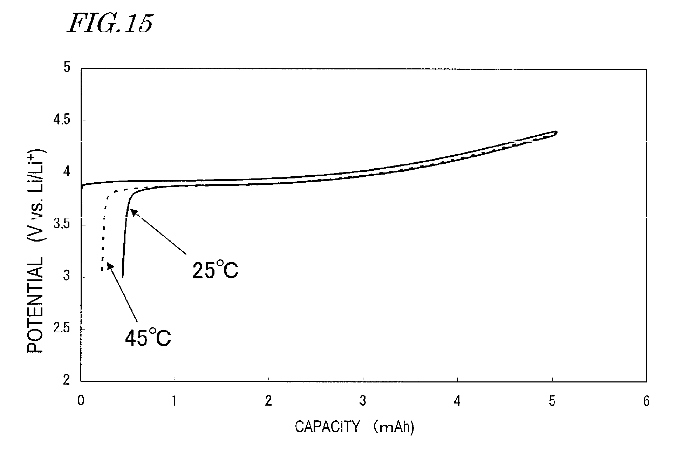

Studies made by the present inventor found that another lithium-containing transition metal oxide, for example, a cobalt-based lithium-containing complex oxide also exhibits a similar behavior to the charge/discharge potential behavior of the nickel-based lithium-containing complex oxide shown in FIG. **9** and FIG. **10**. FIG. **15** shows an example of charge/discharge potential behavior of a cobalt-based lithium-containing complex oxide when the environmental temperature is 25°C and 45°C.

<Discharge end potential of the positive electrode>

As described above, when the discharge end potential of the positive electrode on a lithium metal basis (hereinafter, referred to as the "positive electrode discharge end potential.") is set to be sufficiently high, the battery capacity is small. When the positive electrode discharge end potential is set to a value which is lower than the potential at which the positive electrode potential starts rapidly dropping but is equal to or higher than 2.7 V, the deterioration of the positive electrode due to the increase in the polarization can be suppressed while a certain level of the battery capacity is provided with certainty. However, since the deterioration of the positive electrode caused by the repetition of charge/discharge is suppressed and thus the discharge capacity of the positive electrode (battery capacity) is kept large, the negative electrode utilization factor is also kept high. Accordingly, when the number of times of charge/discharge is increased, the negative electrode is increasingly deteriorated due to the high negative electrode utilization factor. This deterioration of the negative electrode significantly decreases the battery capacity. As a result, it is difficult to further improve the charge/discharge cycle characteristic.

Based on the above, the present inventor intentionally sets the positive electrode discharge end potential to a first potential DVp1, which is lower than 2.7 V. Owing to this, a large battery capacity is provided with certainty. In addition, as compared with in the case where the positive electrode discharge end potential is set to be equal to or higher than 2.7 V, the polarization is increased and the reaction resistance is increased, and thus the positive electrode is more deteriorated. Therefore, while the number of times of charge/discharge is small, the decrease ratio of the battery capacity is large. However, since the negative electrode utilization factor is gradually decreased due to the deterioration of the positive electrode, the deterioration of the negative electrode is significantly smaller than in the case where the positive electrode discharge end potential is set to be equal to or higher than 2.7 V. Accordingly, even when the charge/discharge cycle is further repeated, a rapid increase in the decrease ratio of the battery capacity does not easily occur. As a result, the charge/discharge cycle characteristic can be improved than in the case where the positive electrode discharge end potential is set to be equal to or higher than 2.7 V.

International Publication 01/031722, for example, describes that the surface roughness of a current collector is set to be equal to or higher than 0.01 $\mu$m to alleviate the expansion stress of a silicon-based negative electrode active material, thus to prevent the negative electrode active material from becoming microparticles or from being peeled off from the current collector. The publication also describes that the charge/discharge reversibility at approximately the 100th cycle is increased. However, studies made by the present inventor found that when more than 100 cycles are performed in a charge/discharge cycle test, the negative electrode active material is peeled off and the capacity of the negative electrode is rapidly decreased. By contrast, in this embodiment, as the charge/discharge cycle repetition proceeds, the expansion itself of the negative electrode is gradually suppressed. Therefore, even when a charge/discharge cycle test is performed for many cycles, a conspicuous effect that the capacity maintenance ratio can be held high is provided.

Preferably, the positive electrode discharge end potential is set to be equal to or higher than 1.8 V and lower than 2.7 V. When the positive electrode discharge end potential is lower than 1.8 V, there is an undesirable possibility that the charge/discharge reversibility is significantly decreased due to a change in the crystalline structure of the positive electrode active material. More preferably, the positive electrode discharge end potential is set to be equal to or higher than 2.0 V and equal to or lower than 2.5 V. By setting the positive electrode discharge end potential to equal to or higher than 2.0 V, the deterioration of the positive electrode can be suppressed. By setting the positive electrode discharge end potential to be equal to or lower than 2.5 V, the reversible capacity of the positive electrode can be improved and also the deterioration of the negative electrode can be suppressed more efficiently.

In this embodiment, the negative electrode utilization factor in an initial stage of the cycle repetition (initial negative electrode utiiization factor) may be any value lower than 100%, and is preferably equal to or lower than 80%. When the initial negative electrode utilization factor is suppressed to be equal to or lower than 80%, the deterioration of the negative electrode can be suppressed with more certainty. Meanwhile, in order to provide a large battery capacity, the initial negative electrode utilization factor is preferably, for example, equal to or higher than 40%.

In this embodiment, as the positive electrode active material, a nickel-based lithium-containing complex oxide is used. Among such oxides, it is preferable to use $Li_aNi_{1-(b+c)}Co_bM_cO_2$ (where $1.0 \leq a \leq 1.05$, $0.1 \leq b \leq 0.35$, $0.005 \leq c \leq 0.30$, and M is at least one selected from Al, Sr and Ca).

$LiNiO_2$-based active materials generally have a problem that the crystalline structure is relatively largely changed by charge/discharge and thus a high reversibility is not provided. However, by adjusting the composition as described above, the reversibility can be improved while the capacity is kept high. A reason therefor will be described below.

When the value "a" is equal to or larger than 1.0, the amount of lithium salt used as a material is sufficient. Therefore, existence of electrochemically inactive impurities such as nickel oxide, cobalt oxide and the like is suppressed, and thus the decreases is capacity is not easily induced. When the value "a" is equal to or smaller than 1.05, there is no excessive amount of lithium salt used as a material. Therefore, lithium compounds are suppressed from remaining as impurities and thus, again, the decrease in the capacity is not easily induced. The value "a" is a value when the battery is not charged.

When the value of b is equal to or larger 0.10, the charge/discharge reversibility can be improved with more certainty. When the value of b is equal to or smaller than 0.35, the decrease in the capacity does not easily occur. The value of c is preferably in the range of $0.005 \leq c \leq 0.30$ in term of thermal stability.

In this embodiment, the positive electrode includes a positive electrode current collector and a positive electrode mixture layer formed on a surface of the positive electrode current collector.

The positive electrode current collector may be, for example, a metal foil of aluminum or the like, a lathed or etched metal foil, or the like. As the material of the positive electrode current collector, any material which is routinely used in the field is usable. For example, a metal material such as stainless steel, titanium, aluminum or the like is usable. The positive electrode current collector has a thickness of, for example, equal to or larger than 10 $\mu$m. When the positive electrode current collector is too thick, the inner void volume of a battery case is small, and as a result, the energy density may be decreased. Therefore, the thikness of the positive electrode current collector is preferably equal to or smaller than 30 $\mu$m, and more preferably equal to or smaller than 20 $\mu$m.

The positive electrode mixture layer is formed on one surface or both surfaces of the positive electrode current collector by, for example, the following method. First, a positive electrode mixture paste is produced by causing a positive electrode active material, a binder, a conductive agent, and optionally a thickener to be kneaded and dispersed in a solvent. Next, the positive electrode mixture is applied to the surface of the positive electrode current collector and then dried to produce the positive electrode mixture layer. There is no specific limitation on the method for rolling the current collector with the positive electrode mixture layer formed thereon. For example, the current collector may be rolled by a roll press machine a plurality of times with a line pressure of 1000 to 3000 kg/cm, until the mixture layer attains a prescribed thickness. Alternatively, the current collector may be rolled a plurality of times with different line pressures. Still alternatively, in order to alleviate the inner stress of the mixture caused by the rolling, the current collector may be rolled while being optionally heated. In this manner, the filling density of the active material is made 3.0 to 4.0 g/cm$^3$. Thus, the positive electrode is produced. The thickness of the positive electrode (total thickness of the positive electrode mixture layer and the current collector) is, for example, 100 $\mu$m to 200 $\mu$m. It is preferable that the positive electrode is flexible.

In this embodiment, the positive electrode mixture layer contains, as a positive electrode active material, a nickel-based lithium-containing complex oxide that is capable of occluding/releasing lithium. A preferable composition of the nickel-based lithium-containing complex oxide is the same as the composition described above.

On the binder to be used for the positive electrode mixture layer, there is no specific limitation. Any material which is stable against the solvent and the electrolyte solution to be used is usable. Usable materials include, for example, fluorine-based binders, acrylic rubber, modified acrylic rubber, styrene-butadiene rubber (SBR), isopropylene rubber, butadiene rubber, acrylic polymers, vinyl-based polymers, and the like. These materials may be used independently, or a mixture or a copolymer of two or more thereof may be used. Preferably usable fluorine-based binders include, for example, polyvinylidene difluoride (PVDF), a copolymer of vinylidene difluoride (VDF; registered trademark) and hexafluoropropylene (HFP) (P(VDF-HFP)), a dispersion of polytetrafluoroethylene resin, and the like. In order to increase the filling ratio of the active material so that the decrease in the void ratio of the mixture is suppressed, it is preferable that the bindability is maintained by a small amount of binder. Preferably, 1 to 4 g of binder is used with respect to 100 g of active material.

Preferable usable thickeners include, for example, carboxymethyl cellulose, methyl cellulose, hydroxymethyl cellulose, ethyl cellulose, polyvinyl alcohol, oxidized starch, phosphated starch, casein, and the like.

Usable conductive agents include acetylene black, artificial graphite, natural graphite, carbon fiber, and the like. These materials may be used independently, or a mixture of two or more thereof may be used. In order to increase the filling ratio of the active material so that the decrease in the void ratio of the mixture is suppressed, it is preferable that the conductivity is maintained by a small amount of conductive agent. Preferably, 0.5 to 3.0 g of conductive agent is mixed with 100 g of active material. It is preferable to mix carbon black such as acetylene black or the like and a graphite material such as artificial graphite.

On the solvent, there is no specific limitation. Any material in which the binder is dissolvable is usable. In the case where an organic-based binder is used, for example, an organic solvent such as N-methyl-2-pyrrolidone

(NMP), N,N-dimethylformamide, tetrahydrofuran, dimethylacetamide, dimethylsulfoxide, hexamethyl sulfonamide, tetramethylurea, acetone, methyl ethyl ketone or the like is usable. These organic solvents may be used independently, or a mixed solvent containing two or more thereof may be used. In the case where an aqueous binder is used, it is preferable to use water or warm water as the solvent. For a nickel-based oxide which is weak against moisture, NMP having PVDF dissolved therein is preferable.

On the method for producing the positive electrode mixture paste, there is no specific limitation. For example, a planetary mixer, a homomixer, a pin mixer, a kneader, a homogenizer or the like may be used to knead and disperse a positive electrode or negative electrode active material, a binder, and an optionally-added conductive agent or conductive aid in a solvent. Such production methods may be used independently, or two or more thereof may be used in combination. When kneading and dispersing the materials in the solvent, various types of dispersants, surfactants, stabilizers and the like may be optionally added.

On the method for applying and drying the mixture (application and drying), there is no specific limitation. A mixture paste which is kneaded and dispersed in a solvent can be easily applied to the surface of the current collector by using, for example, a slit die coater, a reverse roll coater, a lip coater, a blade coater, a knife coater, a gravure coater, a dip coater, or the like. The applied mixture may be dried by a method which is close to natural drying. From the perspective of productivity, it is preferable to dry the mixture at a temperature of 70°C to 200°C.

In this embodiment, the negative electrode includes a negative electrode active material and a negative electrode mixture layer formed on a surface of the negative electrode current collector. The negative electrode active material may be a graphite-based material such as artificial graphite, natural graphite or the like or an alloy material such as silicon, tin or the like.

A preferably usable graphite-based material has a reversible capacity of equal to or larger than 350 mAh/g and an irreversible capacity of equal to or smaller than 30 mAh/g. When such a graphite-based material is used, a larger reversible capacity can be provided at a charge/discharge potential close to a Li metal potential. It is especially preferable to use a highly crystalline graphite material having a lattice spacing (d002) of lattice planes (002) of 3.350 to 3.400 angstroms. The graphite material may be processed to be spherical, scaly or massive. In order to increase the filling density, graphite materials having different particle diameters may be mixed together.

In the case where a graphite-based material is used, pre-occlusion of lithium is usually not performed because the positive electrode capacity regulation can be realized even without the pre-occlusion. However, in a preferable example of this embodiment, lithium is occluded to the negative electrode in advance even when a graphite-based material is used. Owing to this, as described above, the negative electrode potential is made lower than the reduction potential of the electrolyte solution in advance, and a protective film is formed on a surface of the graphite. As a result, as compared with in the case of a conventional battery for which the protective film is formed at the time of initial charge, the amount of cracked gas of the electrolyte solution generated at the time of initial charge can be decreased. As described above, when the battery is used at a high temperature, the discharge capacity is increased. This increase in the capacity can be enjoyed as an increase in the battery capacity. Thus, the battery can have a larger capacity.

In the conventional battery, during the formation of the protective film on the surface of the negative electrode (graphite) at the time of initial charge, lithium in the positive electrode is consumed. This decreases the capacity of the positive electrode (herein, the battery capacity). When the battery capacity is decreased, the negative electrode utilization factor in an initial stage of the cycle repetition is decreased. Therefore, there is a possibility that the deterioration of the negative electrode, which would be otherwise caused by a high negative electrode utilization factor, is not caused. In such a case, the effect of the present invention, namely, the effect of suppressing the deterioration, which would be otherwise provided by decreasing the negative electrode utilization factor, may not be provided. By contrast, in this embodiment, even when a graphite-based material is used as the negative electrode active material, the negative electrode is caused to occlude lithium in advance. Therefore, the decrease in the battery capacity, which would otherwise be caused by the formation of the protective film, can be prevented. Accordingly, a high initial negative electrode utilization factor is realized, and the effect provided by decreasing the negative electrode utilization factor is also conspicuous.

On the alloy material used as the active material, there is no specific limitation. Any known material is usable. Usable materials include, for example, silicon-containing compounds, tin-containing compounds and the like. Usable silicon-containing compounds include, for example, silicon, oxides of silicon, nitrides of silicon, silicon-containing alloys, silicon compounds, solid solutions thereof, and the like. The oxides of silicon include, for example, silicon oxide represented by the composition $SiO\alpha$ $(0 < \alpha < 2)$. Carbides of silicon include, for example, silicon carbide represented by the composition $SiC\beta$ $(0 < \beta < 1)$. The nitrides of silicon include, for example, silicon nitride represented by the composition $SiN\gamma$ $(0 < \gamma < 4/3)$. The silicon-containing alloys include, for example, an alloy containing silicon and one or a plurality of elements selected from the group consisting of Fe, Co, Sb, Bi, Pb, Ni, Cu, Zn, Ge, In, Sn and Ti. A part of silicon may be substituted with one or a plurality of elements selected from the group consisting of B, Mg, Ni, Ti, Mo, Co, Ca, Cr, Cu, Fe, Mn, Nb, Ta, V, W, Zn, C, N and Sn. Among these materials, $SiO\alpha$ $(0 < \alpha < 2)$ having a superb charge/discharge reversibility is especially preferable. The tin-containing compounds include, for example, tin, oxides of tin, nitrides of tin, tin-containing alloys, tin compounds, solid solutions thereof, and the like. Preferably usable tin-containing compounds include, for example, tin, oxides of tin such as $SnO\delta$ $(O < \delta < 2)$, $SnO_2$ and the like, tin-containing alloys such as Ni-Sn alloy, Mg-Sn alloy, Fe-Sn alloy, Cu-Sn alloy, ti-Sn alloy and the like, and tin compounds such as $SnSiO_3$, $Ni_2Sn_4$, $Mg_2Sn$ and the like. Among these materials, tin, and oxides of tin such as $SnO\beta$ $(0 < \beta < 2)$, $SnO_2$ and the like are especially preferable.

For the negative electrode current collector, a rolled-out foil, an electrolytic foil or the like formed of, for example, copper or a copper alloy is usable. There is no specific limitation on the shape of the negative electrode current collector. Instead of a foil, a holed foil, an expanded material, a lathed material or the like is usable. A thicker negative electrode current collector, which provides a larger tensile strength, is preferable. However, when the negative electrode current collector is too thick, the inner void volume of the battery case is small, and as a result, the energy density may be decreased. For the purpose of improving the adhesiveness with the mixture, the foil may have projections, particles or the like formed on a surface thereof.

In the case where a powdery negative electrode active material is used, the negative electrode mixture layer is formed on one surface or both surfaces of the positive electrode current collector by, for example, the following method. First, the negative electrode mixture paste is produced by causing a negative electrode active material, a binder, a conductive agent, and optionally a thickener and an conductive aid to be kneaded and dispersed in a solvent. Next, the negative electrode mixture is applied to the surface of the negative electrode current collector and then dried to produce the negative electrode mixture layer. Then, the negative electrode current collector with the negative electrode mixture layer formed thereon is rolled. As a result, the negative electrode is produced. It is preferable that the negative electrode is flexible.

On the method for producing each of the positive electrode mixture paste and the negative electrode mixture paste, there is no specific limitation. For example, a planetary mixer, a homomixer, a pin mixer, a kneader, a homogenizer or the like may be used to knead and disperse a positive or negative electrode active material, a binder, and an optionally-added conductive agent or conductive aid in a solvent. Such production methods may be used independently, or two or more thereof may be used in combination. When kneading and dispersing the materials in the solvent, various types of dispersants, surfactants, stabilizers and the like may be optionally added.

On the method for applying and drying the mixture (application and drying), there is no specific limitation. A mixture paste which is kneaded and dispersed in a solvent can be easily applied to the surface of the current collector by using, for example, a slit die coater, a reverse roll coater, a lip coater, a blade coater, a knife coater, a gravure coater, a dip coater, or the like. The applied mixture may be dried by a method which is close to natural drying. From the perspective of productivity, it is preferable to dry the mixture at a temperature of 70°C to 200°C.

On the method for rolling the current collector with the electrode mixture layer formed thereon, there is no specific limitation. For example, the current collector may be rolled by a roll press machine a plurality of times with a line pressure of 1000 to 3000 kg/cm, until the mixture layer attains a prescribed thickness. Alternatively, the current collector may be rolled a plurality of times with different line pressures.

In the case where the mixture layer contains an alloy active material, the mixture layer may be directly deposited on the negative electrode current collector by a vapor deposition method such as a vacuum vapor deposition method, a sputtering method, a CVD method or the like.

As the separator, a microporous film or a nonwoven fabric of a polyolefin resin such as a polyethylene resin, a polypropylene resin or the like is usable. The microporous film or the nonwoven fabric may have a single layer or a multilayer structure. Preferably, the separator has a two layer structure including a polyethylene resin layer and a polypropylene resin layer, or a three layer structure including two polypropylene resin layers and a polyethylene resin layer interposed therebetween. It is preferable that such a separator has a shutdown function. The separator preferably has a thickness of, for example, equal to or larger than 10 $\mu$m and equal to or smaller than 30 $\mu$m.

A nonaqueous electrolyte contains a nonaqueous solvent and an electrolyte. The nonaqueous solvent contains, for example, cyclic carbonate and chain carbonate as main components. Preferably, the cyclic carbonate is at least one selected from ethylene carbonate (EC), propylene carbonate (PC) and butylene carbonate (BC). Preferably, the chain carbonate is at least one selected from dimethyl carbonate (DMC), diethyl carbonate (DEC), ethyl methyl carbonate (EMC), and the like. The electrolyte contains, for example, a lithium salt which is strongly electron-withdrawing. Example of such a lithium salt include $LiPF_6$, $LiBF_4$, $LiClO_4$, $LiAsF_6$, $LiCF_3SO_3$, $LiN(SO_2CF_3)_2$, $LiN(SO_2C_2F_5)_2$, $LiC(SO_2CF_3)_3$ or the like. These electrolytes may be used independently, or two or more thereof may be used in combination. It is also preferable that such an electrolyte is dissolved in the nonaqueous solvent at a concentration of 0.5 to 1.5 M.

The nonaqueous electrolyte solution may contain a polymer material. For example, a polymer material which is capable of gelating a liquid substance is usable. Any polymer material which is routinely used in the field is usable. Usable polymer materials include, for example, polyvinylidene difluoride, polyacrylonitrile, polyethylene oxide and the like.

<Structure of the battery>

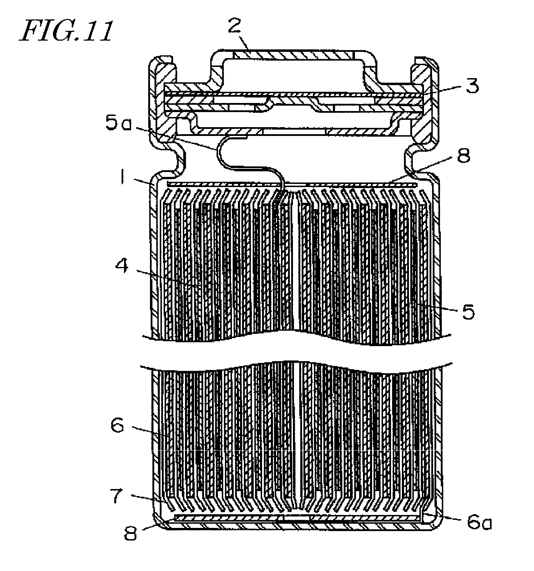

FIG. 11 is a schematic cross-sectional view showing an example of lithium secondary battery in this embodiment.

The lithium secondary battery includes a battery case **1,** an electrode group **4** accommodated in the battery case **1,** and insulation rings **8** respectively disposed above and below the electrode group **4.** The battery case **1** has an upper opening, which is sealed with a sealing plate **2.**

The electrode group **4** has a structure in which a positive electrode **5** and a negative electrode **6** are wound a plurality of times in a spiral while having a separator **7** therebetween. A positive electrode lead **5a** formed of, for example, aluminum is extended from the positive electrode **5,** whereas a negative electrode lead **6a** formed of, for example, copper is extended from the negative electrode **6.** The positive electrode lead **5a** is connected to the sealing plate **2** of the battery case **1.** The negative electrode lead **6a** is connected to a bottom part of the battery case **1.** Although not shown, the battery case **1** accommodates an electrolyte solution injected thereinto together with the electrode group **4.**

The lithium secondary battery having such a structure is produced as follows. First, the negative electrode **6** and the positive electrode **5** are formed, and are wound together with the separator **7** to form the electrode group **4.** Next, the insulation rings **8** are attached respectively above and below the electrode group **4.** The positive electrode lead **5a** extending from the positive electrode **4** is welded to the sealing plate, and the negative electrode lead **6a** extending from the negative electrode **6** is welded to the bottom part of the battery case **1.** These components are inserted into the battery case **1.** Then, a nonaqueous electrolyte (not shown) for conducting lithium ions is injected into the battery case **1,** and the opening of the battery case **1** is sealed with the sealing plate **2,** with an insulation packing **3** being held between the battery case **1** and the sealing plate **2.**

The charge/discharge method for the positive electrode in this embodiment is broadly applicable to lithium secondary batteries using a nickel-based lithium-containing complex oxide as a positive electrode active material. Such a lithium secondary battery may be a stacked-type lithium secondary battery including an electrode group which includes a stack of a positive electrode, a separator and a negative electrode, or may be a wound-type lithium secondary battery including the electrode group wound a plurality of times.

The lithium secondary battery used in this embodiment may include a third electrode (reference electrode) in addition to the positive electrode and the negative electrode. In this case, the positive electrode potential on a lithium metal basis can be detected based on a potential difference between the reference electrode and the positive electrode. Therefore, the time to finish the discharge can be controlled more precisely.

A lithium secondary battery with no reference electrode is set to, for example, finish the discharge by sensing the voltage of the battery (battery voltage) corresponding to a prescribed positive electrode potential. By contrast, a lithium secondary battery including a reference electrode is set to finish the discharge as follows. The positive electrode potential is monitored on a basis of the reference electrode (e.g., lithium metal), and when the positive electrode potential is sensed to have reached a prescribed discharge potential (lower than 2.7 V), the discharge of the battery is finished. In this manner, the positive electrode potential is directly detected to finish the discharge. Therefore, the discharge can be finished more certainly at a desirable point in time. Thus, the deterioration of the positive electrode can be suppressed more effectively. Both of the battery voltage and the positive electrode potential may be monitored using a lithium secondary battery including a reference electrode.

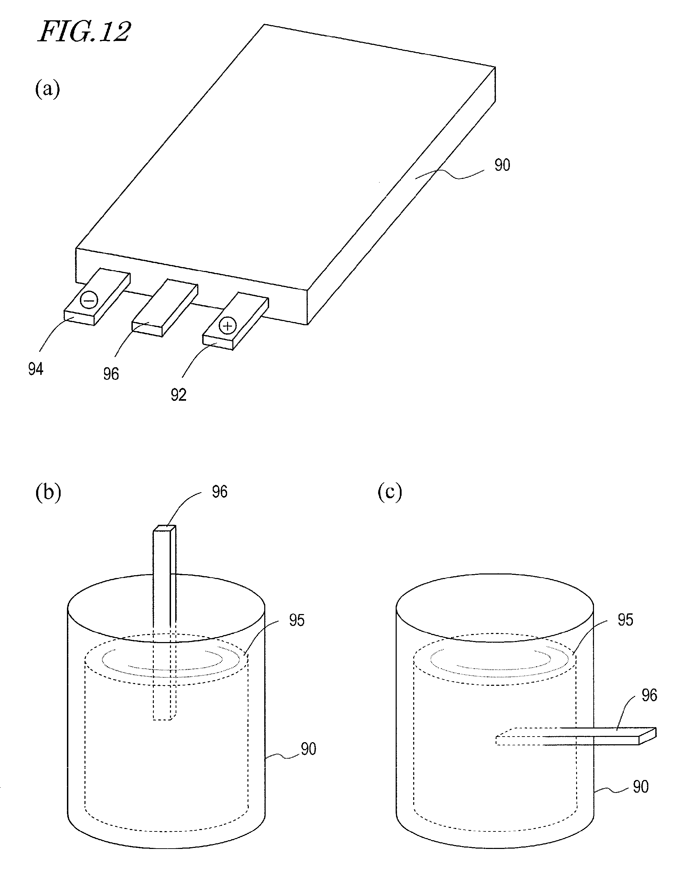

FIGS. **12(a)** through **12(c)** are each an isometric view showing an example of structure of a lithium secondary battery including a reference electrode.

FIG. **12(a)** shows an example of stacked-type lithium secondary battery. With this structure, the reference electrode is located in the vicinity of an electrode group provided in a stacked manner in an outer case **90**. The positive electrode and the negative electrode in the electrode group are connected to a positive electrode tab **92** and a negative electrode tab **94,** respectively. The reference electrode is connected to a reference electrode tab **96**. The reference electrode tab **96** is extended outside the outer case **90** together with the positive electrode tab **92** and the negative electrode tab **94**. In the example shown in the figure, the reference electrode tab **96** is extended outside from a side surface of the outer case **90,** but the position at which the reference electrode tab **96** is extended outside is not specifically limited.

It is preferable that the outer case **90** is formed of a laminated film. In this case, the freedom of location of the reference electrode tab **96** is raised. This allows the position at which the reference electrode tab **96** is extended outside to be selected in accordance with the shape, environment of use, application or the like of the battery. The outer case **90** may be a metal case, a resin case, a ceramic case or the like.

FIGS. **12(b)** and **12(c)** each show an example of wound-type lithium secondary battery. With this structure, the reference electrode is located in the vicinity of the center of an electrode group **95** provided in a wound manner. The reference electrode is connected to the reference electrode tab **96,** and the reference electrode tab **96** is extended outside the outer case **90**. The position at which the reference electrode tab **96** is extended outside is not specifically limited. The reference electrode tab **96** may be extended outside from a top surface of the outer case **90** as shown in FIG. **12 (a)** or from a position near the center of a side surface of the outer case **90** as shown in FIG. **12(b).** The structure of the lithium secondary battery including the reference electrode is not limited to those shown in FIGS. **12(a)** through **12(c).**

On the material of the reference electrode, there is no specific limitation. Any material having a stable equilibrium potential in the system of the lithium secondary battery is usable. Usable materials include, for example, lithium metal, noble metal materials such as silver, gold, platinum and the like, ceramic materials such lithium titanium oxides, and the like. In the case where a material other than lithium metal is to be used, the potential of the material with respect to the lithium metal is measured in advance. Owing to this, a measured value of the potential difference between the reference electrode and the positive electrode can be corrected to the positive electrode potential on a lithium metal basis.

On the size, position or number of the reference electrode, there is no specific limitation. It suffices that the reference electrode be located in the vicinity of the electrode to be monitored. The negative electrode potential may be monitored in addition to the positive electrode potential by use of the same reference electrode, and the charge/discharge of the lithium secondary battery can be controlled based on these potentials.

An assembled battery may be produced by combining a plurality of lithium secondary batteries each including a reference electrode. In an assembled battery produced by connecting a plurality lithium secondary batteries with no reference electrode in series, the voltage is usually controlled based on the voltage of terminals at both ends of the assembly of the connected lithium secondary batteries. Therefore, when the lithium secondary batteries included in the assembled battery are deteriorated by different degrees as the charge/discharge cycle repetition proceeds, the lithium secondary battery having the characteristics thereof deteriorated by a largest degree may undesirably be over-discharged on the discharge side. When a positive electrode using a nickel-based lithium-containing complex oxide as the positive electrode active material is over-discharged (deep-discharged), the deterioration thereof may be possibly accelerated by the phenomenon described above. For preventing this, monitoring the terminal voltages of each lithium secondary battery is considered to be effective. In the case where the plurality of lithium secondary batteries included in the assembled battery each include a reference electrode, the positive electrode potential with respect to the reference electrode of each lithium secondary battery can be controlled in addition to, or instead of, the terminal voltages of each lithium secondary battery being monitored. Owing to this, the deterioration of the positive electrode of each lithium secondary battery included in the assembled battery can be prevented more certainly.

In this embodiment, there is no specific limitation on the source material of the negative electrode active material, the separator, the nonaqueous electrolyte or the like, or the structure of the battery.

This embodiment is also applicable to a charge/discharge system including a lithium secondary battery. Such a charge/discharge system may include, for example, a lithium secondary battery, a discharge control section for controlling discharge of the lithium secondary battery, and a voltage measurement section for sensing the battery voltage of the lithium secondary battery during the discharge. The charge/discharge system may further include a charge control section for controlling charge of the lithium secondary battery, and a load section connected to the lithium secondary battery. The discharge control section finishes the discharge when the discharge potential of the positive electrode active material on a lithium metal basis reaches a prescribed potential which is lower than 2.7 V.

In this embodiment, the charge/discharge system is preferably designed such that the capacity of the negative electrode active material is larger than the capacity of the positive electrode active material. In this case, a situation where the discharge potential of the negative electrode active material rapidly rises to finish the discharge before the discharge potential of the positive electrode active material reaches the prescribed potential can be prevented.

The charge/discharge system in this embodiment is not limited to having the above-described structure. The voltage measurement section may directly measure the discharge potential of the positive electrode active material, or may measure the battery voltage during the discharge. Alternatively, the voltage measurement section may measure both of the discharge potential of the positive electrode active material and the battery voltage. The discharge control section finishes the discharge when sensing that the discharge potential of the positive electrode active material has reached a prescribed discharge end potential based on the value measured by the voltage measurement section (the measured value of the battery voltage, the measured value of the discharge potential, or both of them). For example, the discharge control section may finish the discharge when the battery voltage measured by the voltage measurement section reaches a prescribed threshold voltage corresponding to the prescribed discharge end potential ("first threshold voltage"). The "first threshold voltage" is set to a level in a range of battery voltage at which the discharge potential of the positive electrode active material on a lithium metal basis is lower than 2.7 V, preferably equal to or higher than 1.8 V and lower than 2.7 V.

In the case where the time to finish the discharge is controlled by use of the battery voltage as described above, it is preferable to perform a preliminary charge/discharge test using the electrode group to be used in the charge/discharge system. By performing the preliminary charge/discharge test, the range of battery voltage at which the discharge potential of the positive electrode active material is equal to or higher than 1.8 V and lower than 2.7 V can be found in advance. The first threshold voltage may be set to a level within such a range.

In the case where, for example, graphite is used as the negative electrode active material (in the case where, the irreversible capacity of the positive electrode is larger than the irreversible capacity of the negative electrode; or in the case where the irreversible capacity of the negative electrode is supplemented in advance), the discharge potential of the negative electrode is generally constant in a late stage of the discharge of the positive electrode. Therefore, the battery voltage is mainly determined by the discharge potential of the positive electrode. The range of battery voltage corresponding to the discharge potential of the positive electrode active material lower than is, for example, lower than 2.5 V. Accordingly, the first threshold voltage may be any voltage lower than 2.5 V.

In the case where, for example, a silicon-based alloy or oxide is used as the negative electrode active material (in the case where the irreversible capacity of the positive electrode is larger than the irreversible capacity of the negative electrode; or in the case where the irreversible capacity of the negative electrode is supplemented in advance), the negative electrode potential slowly increases in the range of 0.4 to 0.7 V in a late stage of the discharge of the positive electrode. Therefore, the battery voltage is not determined by the discharge potential of the positive electrode only, but depends also on the potential change of the negative electrode. In this case also, the range of battery voltage corresponding to the discharge potential of the positive electrode of lower than 2.7 V is found by the preliminary charge/discharge test, and thus the first threshold voltage can be set. In this case, the range of battery voltage is, for example, lower than (2.7 - Vn) (where Vn: 0.4 to 0.7 V).

The above-described charge/discharge system is broadly applicable to, for example, power supplies of electronic devices such as mobile phones and the like, vehicles such as electric vehicles, and electric motors of power tools and the like. Devices such as electronic devices, vehicles, and power tools may be constructed such that a battery pack (or battery module) having the charge/discharge system can be detachably attached thereto. In this case, a control device including a charge control section, a discharge control section, and a voltage measurement section may be provided within the battery pack (or battery module). Alternatively, the control device may be provided on the device side.

In this specification, the "battery pack" refers to one or a plurality of batteries (cells) accommodated within a single container. For safety concerns and the like, a protection circuit and a control circuit are optionally provided in the battery pack. Meanwhile, a large-sized power supply having many lithium secondary batteries may particularly be termed a "battery module". A battery module can be used as a power supply of an electric vehicle, an electric storage system for household use or the like. For safety concerns, a cooling device may be provided in the battery module in addition to the lithium secondary batteries and the control device.

In the case where this embodiment is applied to a vehicle such as an electric vehicle or the like, the vehicle may have a body and a prime mover for driving the body, and the prime mover may include an electric motor drivable by a lithium secondary battery. In an electric motor, it suffices that the lithium secondary battery be charged/discharged such that the discharge end voltage is within the aforementioned range. The prime mover may include merely an electric motor drivable by a secondary battery (electric vehicle), or may include an electric motor drivable by a secondary battery and an internal combustion engine (hybrid vehicle). The vehicle may be an ordinary automobile such as a sedan type or wagon type automobile, a light automobile, a motorcycle, or the like.

As described in the following embodiments, the positive electrode discharge end potential at the end of the discharge of the lithium secondary battery may be switchable  between two or more potentials. In this case, it can be selected when necessary whether to perform the discharge in a mode in which the discharge end potential is high or to perform the discharge in a mode in which the discharge end potential is lower. Specifically, the charge/discharge may be switchable between first charge/discharge in which the discharge is finished when the discharge potential of the positive electrode reaches a first potential lower than 2.7 V on a lithium metal basis, and second charge/discharge in which the discharge is finished when the discharge potential of the positive electrode reaches a second potential higher than the first potential. The second potential may be equal to or higher than 2.7 V. It is preferable that the second potential is equal to or lower than potential **s** shown in FIG. **1** (e.g., equal to or lower than 3.4 V) in order to prevent the decrease in the capacity.

In each type of charge/discharge, the discharge may be finished when the battery voltage reaches a prescribed threshold voltage, instead of the positive electrode discharge end potential. For example, the charge/discharge may be switchable between first charge/discharge in which the discharge is finished when the battery voltage reaches a first threshold voltage at which the discharge potential of the positive electrode on a lithium metal basis is lower than 2.7 V, and second charge/discharge in which the discharge is finished when the battery voltage reaches a second threshold voltage which is lower than the first threshold voltage. In the case where the negative electrode active material contains graphite, the first threshold voltage VDc1 is, for example, lower than 2.5 V. The switching of the threshold voltage at which the discharge is to be finished can be made by threshold voltage switching means provided in the charge/discharge system.

The switching between the first charge/discharge and the second charge/discharge may be performed by the user of the device when necessary. Alternatively, the discharge control section may be structured to automatically switch the first charge/discharge to the second charge/discharge or vice versa based on a condition which is input in advance. Owing to such a structure, the charge/discharge cycle characteristic of the lithium secondary battery can be improved to a certain extent in accordance with the application or the state of use of the device.

For example, the first charge/discharge and the second charge/discharge may be switched as follows. From the start of the charge/discharge cycle repetition to the n'th cycle (n: prescribed number of cycles), the second charge/discharge in which the deterioration of the positive electrode is suppressed (e.g., positive electrode discharge end potential: equal to or higher than 2.7 V and equal to or lower than 3.4 V) is performed a larger number of times than the first charge/discharge; and after the (n+1) th cycle, the  first charge/discharge in which the deterioration of the positive electrode is progressed is performed a larger number of times than the second charge/discharge. Owing to this, the capacity decrease ratio can be suppressed to be small until the n'th cycle, and a significant decrease in the battery capacity due to the deterioration of the negative electrode can be suppressed in the later cycles. Alternatively, the second charge/discharge may be performed a larger number of times until the n'th cycle (n: prescribed number of cycles), whereas the first charge/discharge may be performed a larger number of times in the later cycles. In this case also, substantially the same effect can be provided.

In the above embodiment, a nickel-based lithium-containing complex oxide is used as the positive electrode active material. Alternatively, a cobalt-based lithium-containing complex oxide (e.g., $LiCoO_2$) may be used. As described above with reference to FIG. **15,** a cobalt-based lithium-containing complex oxide exhibits a similar behavior to the charge/discharge potential behavior of the nickel-based lithium-containing complex oxide shown in FIG. **9** and FIG. **10.** Therefore, substantially the same effect as that in the above embodiment is provided. Namely, the deterioration of the positive electrode active material caused by the repetition of the charge/discharge cycles can be utilized to decrease the negative electrode utilization factor, so that  the deterioration of the negative electrode can be suppressed.

In the above embodiment, a negative electrode active material having lithium occluded thereto in advance is used. Alternatively, the negative electrode active material does not need to have lithium occluded thereto in advance. Substantially the same effect as that in the embodiment is provided in the case where, for example, a nickel-based lithium-containing complex oxide is used for the positive electrode and an active material having a very small irreversible capacity such as lithium metal, $Li_4Ti_5O_{12}$ or the like is used for the negative electrode.

<Example 1>

A lithium secondary battery using a nickel-based lithium-containing complex oxide as the positive electrode active material and graphite as the negative electrode active material was evaluated. Evaluation methods and results will be described.

(1-1) Production of positive electrode active materials A, B and C

Positive electrode active materials respectively containing three nickel-based lithium-containing complex oxides of different compositions were produced. Specifically, positive electrode active material A having a composition expressed by $LiNi_{0.815}Co_{0.15}Al_{0.035}O_2$, positive electrode active material B having a composition expressed by $LiNi_{0.76}Co_{0.14}Al_{0.10}O_2$, and positive electrode active material C having a composition expressed by $LiNi_{1/3}Mn_{1/3}Co_{1/3}O_2$ were produced.

A method for producing positive electrode active material A will be described below.

First, an aqueous solution containing nickel sulfate at a concentration of 0.815 mol/L, an aqueous solution containing cobalt sulfate at a concentration of 0.15 mol/L, and an aqueous solution containing aluminum sulfate at a concentration of 0.035 mol/L were prepared and mixed. Next, the mixed aqueous solution was continuously supplied into a reaction vessel. Then, sodium hydroxide was dripped to the reaction vessel such that the aqueous solution in the reaction vessel would be maintained at a pH between 10 and 13, and thus a precursor of the active material was synthesized. The resultant precursor was washed well with water, and dried. In this manner, a hydroxide expressed by $Ni_{0.815}Co_{0.15}Al_{0.035}(OH)_2$ was obtained as the precursor.

The resultant precursor and lithium carbonate were mixed such that lithium, cobalt, nickel and aluminum would have a molar ratio (Ni:Co:Ni:Al) of 1:0.815:0.15:0.035. In an oxygen atmosphere, the mixture was prebaked at a temperature of 500°C for 7 hours, and pulverized. Next, the pulverized bake was baked again at a temperature of 800°C for 15 hours. The bake was pulverized and then subjected to a size classification. Thus, positive electrode active material A was obtained.

A method for producing positive electrode active material B will be described below.

First, an aqueous solution containing nickel sulfate at a concentration of 0.76 mol/L, an aqueous solution containing cobalt sulfate at a concentration of 0.14 mol/L, and an aqueous solution containing aluminum sulfate at a concentration of 0.10 mol/L were prepared and mixed. Next, the mixed aqueous solution was continuously supplied into a reaction vessel. Sodium hydroxide was dripped to the reaction vessel such that the aqueous solution in the reaction layer would be maintained at a pH between 10 and 13, and thus a precursor of the active material was synthesized. The resultant precursor was washed well with water, and dried. In this manner, a hydroxide expressed by $Ni_{0.76}Co_{0.14}Al_{0.10}(OH)_2$ was obtained as the precursor.

The resultant precursor and lithium carbonate were mixed such that lithium, cobalt, nickel and aluminum would have a molar ratio of 1:0.76:0.14:0.10. In an oxygen atmosphere, the mixture was prebaked at a temperature of 500°C for 7 hours, and pulverized. Next, the pulverized bake was baked again at a temperature of 800°C for 15 hours. The bake was pulverized and then subjected to a size classification. Thus, positive electrode active material B was obtained.

A method for producing positive electrode active material C will be described below.

First, an aqueous solution containing nickel sulfate, manganese sulfate and cobalt sulfate at an equal mol concentration was continuously supplied into a reaction vessel. Then, sodium hydroxide was dripped to the reaction vessel such that the aqueous solution in the reaction vessel would be maintained at a pH between 10 and 13, and thus a precursor of the active material was synthesized. The resultant precursor was washed well with water, and dried. As a result, a hydroxide expressed by $Ni_{1/3}Mn_{1/3}Co_{1/3}(OH)_2$ was obtained. The resultant precursor and lithium carbonate were mixed such that lithium, nickel, cobalt and manganese would have a molar ratio of 3:1:1:1. In an oxygen atmosphere, the mixture was prebaked at a temperature of 500°C for 7 hours, and pulverized. Next, the pulverized bake was baked again at a temperature of 800°C for 15 hours. The bake was pulverized and then subjected to a size classification. Thus, positive electrode active material C expressed by chemical formula $LiNi_{1/3}Mn_{1/3}Co_{1/3}O_2$ was obtained.

(1-2) Production of positive electrodes

positive electrodes respectively using positive electrode active materials A, B and C were produced.

A method for producing a positive electrode using positive electrode active material A will be described below.

First, 100 g of a powder of positive electrode active material A obtained by the method described in (1-1) above was mixed well with 2 g of acetylene black (conductive agent), 2 g of artificial graphite (conductive agent), 3 g of polyvinylidene difluoride powder (binder) and 50 ml of organic solvent (NMP) to prepare a mixture paste. This mixture paste was applied to one surface of an aluminum foil (positive electrode current collector) having a thickness of 15 μm. The mixture paste was dried to obtain a positive electrode active material layer.

Then, the aluminum foil having the positive electrode active material layer formed thereon was rolled to form the positive electrode. The thickness of the positive electrode, namely, the total thickness of the current collector and the positive electrode active material layer, was 65 μm, and the positive electrode capacity per unit area was 3.0 mAh/cm². This positive electrode capacity was a capacity in the case where lithium metal was used for the negative electrode and constant-current charge/discharge was conducted under conditions of charge current value: 0.1 mA/cm²; end voltage: 4.25 V; discharge current value: 0.1 mA/cm²; and end voltage: 3.0 V.

Now, a method for producing a positive electrode using positive electrode active material B will be described below.

First, 100 g of a powder of positive electrode active material B obtained by the method described in (1-1) above was mixed well with 5 g of acetylene black (conductive agent), 3 g of synthetic polyvinylidene difluoride powder (binder) and 50 ml of organic solvent (NMP) to prepare a mixture paste. This mixture paste was applied to one surface of an aluminum foil (positive electrode current collector) having a thickness of 15 $\mu$m. The mixture paste was dried to obtain a positive electrode active material layer.

Then, the aluminum foil having the positive electrode active material layer formed thereon was rolled to form the positive electrode. The thickness of the positive electrode, namely, the total thickness of the current collector and the positive electrode active material layer, was 51 $\mu$m, and the positive electrode capacity per unit area was 1.6 mAh/cm$^2$. This positive electrode capacity was a capacity in the case where lithium metal was used for the negative electrode and constant-current charge/discharge was conducted under conditions of charge current value: 0.1 mA/cm$^2$; end voltage: 4.25 V; discharge current value: 0.1 mA/cm$^2$; and end voltage: 3.0 V.

Now, a method for producing a positive electrode using positive electrode active material C will be described below.

First, 100 g of a powder of positive electrode active material C obtained by the method described above is mixed well with 3 g of acetylene black (conductive agent), an aqueous dispersion of tetrafluoroethylene containing 4 g of tetrafluoroethylene (binder) and 50 ml of pure water to prepare a mixture paste. This mixture paste was applied to one surface of an aluminum foil (positive electrode current collector) having a thickness of 15 $\mu$m. The mixture paste was dried to obtain a positive electrode active material layer.

Then, the aluminum foil having the positive electrode active material layer formed thereon was rolled to form the positive electrode. The thickness of the positive electrode, namely, the total thickness of the current collector and the positive electrode active material layer, was 64 $\mu$m, and the positive electrode capacity per unit area was 3.1 mAh/cm$^2$. This positive electrode capacity was a capacity in the case where lithium metal was used for the negative electrode and constant-current charge/discharge was conducted under conditions of charge current value: 0.1 mA/cm$^2$; end voltage: 4.25 V; discharge current value: 0.1 mA/cm$^2$; and end voltage: 3.0 V.

(1-3) Production of a negative electrode

For evaluation cells in this example, substantially the same negative electrodes were used regardless of the type of positive electrode active material. A method for producing the negative electrode will be described below.

100 g of artificial graphite as a negative electrode active material, 2.5 g of "BM-400B (trade name)" manufactured by Zeon Corporation (aqueous dispersion containing 40% by weight of denatured styrene-butadiene copolymer) as a binder, 1 g of CMC as a thickener, and an appropriate amount of water were stirred by a planetary mixer to prepare a mixture paste. This mixture paste was applied on one surface of an electrolytic copper foil having a thickness of 10 $\mu$m. Then, the mixture paste was dried to obtain a negative electrode active material layer.

Next, the electrolytic copper foil having the active material layer formed thereon was rolled to obtain the negative electrode having a thickness of 80 $\mu$m. In order to evaluate the performance of the positive electrode, the capacity of the negative electrode was made larger than that of positive electrode. Specifically, the negative electrode capacity per unit area was 4.1 mAh/cm$^2$. This negative electrode capacity was a capacity in the case where lithium metal was used for a counter electrode and constant-current charge/discharge was conducted under conditions of charge current value: 0.1 mA/cm$^2$; end voltage: 0 V; discharge current value: 0.1 mA/cm$^2$; and end voltage: 1.5 V.

In order to prevent the discharge end voltage of the evaluation cells from being affected by a changes in the discharge potential of the negative electrode in a charge/discharge cycle test described below, the negative electrode was caused to electrochemically occlude lithium equivalent to 0.5 mAh/cm$^2$ in advance. The "electrochemical occlusion of lithium" was performed as follows. Apart from the evaluation cells, a cell for preliminary charge was produced. For the cell for preliminary charge, the negative electrode of the evaluation cells was used as the positive electrode, and lithium metal was used for the negative electrode. The cell for preliminary charge was merely charged to have the positive electrode (i.e., negative electrode of the evaluation cells) occlude lithium. As a result, in a late stage of the discharge, the point in time at which the negative electrode potential rises can be sufficiently delayed from the point in time at which the positive electrode potential significantly drops. (The potential behavior as shown in Fig. **8** is exhibited.)

(1-4) Structure of, and method for producing, a lithium secondary battery

In this example, as a lithium secondary battery, a stacked-type cell including an electrode group which includes a stack of a positive electrode, a separator and a negative electrode is used.

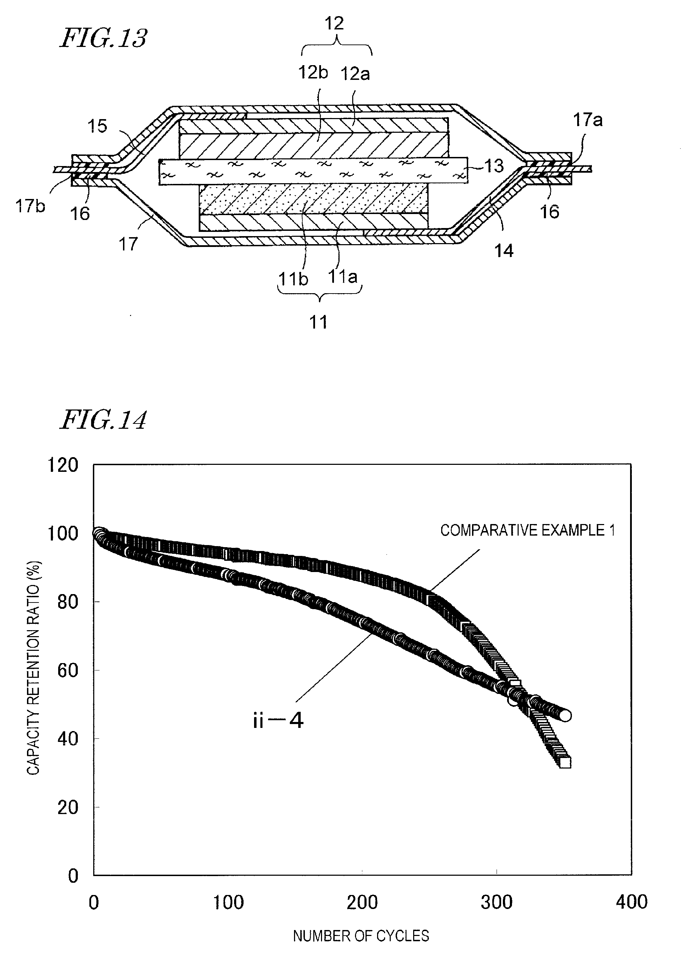

FIG. **13** is a cross-sectional view schematically showing a structure of the lithium secondary battery used in this example.

The evaluation cell includes a positive electrode **11,** a negative electrode **12,** a separator **13,** a positive electrode lead **14,** a negative electrode lead **15,** a gasket **16,** and an outer case **17.** Herein, the positive electrode produced in (1-2) above is used as the positive electrode **11,** and the negative electrode produced in (1-3) above is used as the negative electrode **12.** The positive electrode **11** includes a positive electrode current collector **11a** and a positive electrode active material layer **11b,** whereas the negative electrode **12** includes a negative electrode current collector **12a** and a negative electrode active material layer **12b.** The separator **13** is located between the positive electrode active material layer **11b** and the negative electrode active material layer **12b.** The positive electrode lead **14** is connected to the positive electrode current collector **11a,** and the negative electrode lead **15** is connected to the negative electrode current collector **12a.** An electrode group including the positive electrode **11,** the negative electrode **12** and the separator **13** is contained in the outer case **17** together with an electrolyte.

Next, a method for producing the lithium secondary battery will be described.

The positive electrode using positive electrode active material A was cut into a size of 20 mm × 20 mm to obtain the positive electrode **11.** Similarly, the negative electrode obtained in (1-3) above was cut into a size of 20 mm × 20 mm to obtain the negative electrode **12.** Next, the leads **14** and **15** were welded respectively to parts of the current collectors **11a** and **12a** of the positive electrode **11** and the negative electrode **12** where the active material layers **11b** and **12b** were not formed.

Then, the positive electrode **11,** the separator **13,** and the negative electrode **12** were stacked such that the positive electrode active material layer **11b** and the negative electrode active material layer **12b** would face each other while having the separator (polyethylene microporous film) **13** therebetween to produce the electrode group. The electrode group was inserted into the outer case **17,** formed of an aluminum laminate, together with 0.5 g of electrolyte. The electrolyte was produced as follows: ethylene carbonate (EC), ethyl methyl carbonate (EMC) and diethyl carbonate (DEC) were mixed at a volume ratio of EC:EMC:DEC = 2:3:5, and $LiPF_6$ was dissolved in the resultant mixture solvent at a concentration of 1.0 mol/L. Then, vinylene carbonate was added at a weight ratio of 2%. Thus, the electrolyte solution was obtained.

Next, lithium metal was prepared as a reference electrode. The reference electrode (not shown) was located in the vicinity of the positive electrode **11** in the outer case **17.** The positive electrode lead, the negative electrode lead and a reference electrode lead were allowed to extend outside the outer case **17** through openings of the outer case **17.** Then, the openings of the outer case **17** were welded while the inner pressure of the outer case **17** was vacuum-reduced. In this manner, the lithium secondary battery using positive electrode active material A (hereinafter, the lithium secondary battery will be referred to as "lithium secondary battery A") was produced.

By substantially the same methods as above, evaluation cells using positive electrode active materials B and C as the positive electrodes **11** were produced. These evaluation cells will be referred to as "lithium secondary battery B" and "lithium secondary battery C", respectively.

(1-5) Evaluation on the initial capacity and the charge/discharge cycle characteristic

Next, a charge/discharge test was performed on lithium secondary batteries A, B and C to examine the relationship among the positive electrode discharge end potential, the battery capacity and the charge/discharge cycle characteristic. Herein, tests i-1 through i-4 were performed on lithium secondary battery A, test i-5 was performed on lithium secondary battery B, and test i-6 was performed on lithium secondary battery C.

The evaluation conditions and results of tests i-1 through i-3 and i-5 will be described below.

(i) Tests i-1 through i-3, i-5 (lithium secondary batteries A and C)

First, the first cycle of charge/discharge was performed under the following conditions.

<Evaluation conditions on the battery capacity>

Constant-current charge: 8 mA; end voltage: 4.2 V
Constant-voltage charge: end current: 0.3 mA; pause time: 20 minutes
Constant-current discharge: 2.4 mA; end voltage (as shown in Table 2); pause time: 20 minutes
Test temperature: as shown in Table 2

The discharge capacity after the first cycle of charge/discharge was set as the battery capacity ($mAh/cm^2$), and shown in Table 2.

The contents of lithium in positive electrode active material A, namely, the x values in the composition

$Li_xNi_{0\cdot815}Co_{0.15}Al_{0.035}O_2$ of positive electrode active material A, at the end of charge and at the end of the discharge (discharge end) were examined. In tests i-1 through i-3, the x values were 0.921, 0.939 and 1.017, respectively. In test i-5, the x value at the discharge end was 0.920. The x value at the end of charge was 0.232 in tests i-1 through i-3, and was 0.404 in test i-5.

Next, the discharge current value was increased, and second and subsequent cycles of charge/discharge were performed under the following conditions.

<Evaluation conditions on the charge/discharge cycle characteristic>

> Constant-current charge: 8 mA; end voltage: 4.2 V
> Constant-voltage charge: end current: 0.3 mA; pause time: 20 minutes
> Constant-current discharge: 12 mA; end voltage (as shown in Table 2); pause time: 20 minutes
> Test temperature: as shown in Table 2

After repeating the charge/discharge under the above conditions, the discharge capacity after a prescribed number of cycles was divided by the battery capacity and the resultant value was set as the "capacity retention ratio (%)". In Tests i-1, i-2 and i-5, the capacity retention rate after the 500th cycle (n = 500) was found. In test i-3, the battery was too deteriorated to perform 500 cycles of the charge/discharge. Therefore, the capacity retention ratio after the 150th cycle (n = 150) was found. The results are shown in Table 2.

(ii) Test i-4 (lithium secondary battery B)

First, the first cycle of charge/discharge was performed under the following conditions.

<Evaluation conditions on the battery capacity>

> Constant-current charge: 4 mA; end voltage: 4.2 V
> Constant-voltage charge: end current: 0.15 mA; pause time: 20 minutes
> Constant-current discharge: 1.2 mA; end voltage: 3.0 V; pause time: 20 minutes

The contents of lithium in positive electrode active material B, namely, the x values in the composition $Li_xNi_{0.76}Co_{0.14}Al_{0.10}O_2$ of positive electrode active material B, at the end of charge and at the end of the discharge (discharge end) were examined. The x value at the discharge end was 0.850. In test i-4, the x value at the end of charge was 0.230.
Next, the discharge current value was increased, and second and subsequent cycles of charge/discharge were performed under the following conditions.

<Evaluation conditions on the charge/discharge cycle characteristic>

> Constant-current charge: 4 mA; end voltage: 4.2 V
> Constant-voltage charge: end current: 0.15 mA; pause time: 20 minutes
> Constant-current discharge: 6 mA; end voltage: 3.0 V; pause time: 20 minutes

After repeating the charge/discharge under the above conditions, the capacity retention ratio after the 500th cycle was found. The results are shown in Table 3.
After a prescribed number of cycles, each battery was disassembled, and the positive electrode and the negative electrode were taken out. The positive electrode and the negative electrode were washed well with dimethyl carbonate and then dried. Lithium metal was used as a counter electrode, and the separator and the electrolyte solution were replaced. The remaining capacity of each of the positive electrode and the negative electrode was measured under the same conditions used for evaluating the positive electrode capacity and the negative electrode capacity in the initial state. The remaining capacities were respectively divided by the positive electrode capacity and the negative electrode capacity in the initial state and the resultant values were set as the capacity retention ratios (%) of the respective electrodes.

[Table 2]

| Test No. | Positive electrode active material | Battery capacity (mAh/cm$^2$) | Positive electrode capacity (mAh/cm$^2$) | Negative electrode capacity (mAh/cm$^2$) | Discharge end voltage of cell (V) | Positive electrode discharge end potential (V) |
|---|---|---|---|---|---|---|
| i-1 | A | 3.0 | 3.0 | 4.1 | 2.5 | 2.68 |
| i-2 | A | 3.1 | 3.0 | 4.1 | 2.0 | 2.31 |
| i-3 | A | 3.2 | 3.0 | 4.1 | 1.5 | 1.75 |
| i-4 | B | 1.6 | 1.6 | 4.1 | 2.5 | 2.65 |
| i-5 | C | 3.1 | 3.1 | 4.1 | 2.5 | 2.65 |

[Table 3]

| Test No. | Battery capacity retention ratio after 500th cycle (%) | Capacity retention ratio of positive electrode (%) | Capacity retention ratio of negative electrode (%) | Li deposited/not deposited |
|---|---|---|---|---|
| i-1 | 73 | 73 | 95 | Not deposited |
| i-2 | 56 | 56 | 95 | Not deposited |
| i-3 | 50 (150th cycle) | 50 | 95 | Not deposited |
| i-4 | 74 | 74 | 97 | Not deposited |
| i-5 | 77 | 77 | 96 | Not deposited |

As can be seen from the results in Table 3, as the positive electrode discharge end potential was lower, the capacity retention ratio was lower. The capacity retention ratio of each battery after the 500th cycle (in test i-3, after the 150th cycle) was the same as the capacity retention ratio of the positive electrode of the same battery. From this, it is understood that the deterioration of the battery is progressed by the deterioration of the positive electrode. The negative electrode capacity was maintained large. In any of the tests, deposition of Li metal was not observed on the negative electrode. Substantially the same results were obtained when a different type of positive electrode was used.

<Example 2>

(Production of positive electrodes)

In this example also, substantially the same positive electrodes as those using positive electrode active material A and positive electrode active material C in Example 1 were produced.

In the positive electrode using positive electrode active material A, the thickness of the positive electrode, namely, the total thickness of the current collector and the positive electrode active material layer, was 72 $\mu$m, and the positive electrode capacity per unit area was 3.86 mAh/cm$^2$. This positive electrode capacity was a capacity in the case where lithium metal was used for the negative electrode and constant-current charge/discharge was conducted under conditions of charge current value: 0.1 mA/cm$^2$; end voltage: 4.25 V; discharge current value: 0.1 mA/cm$^2$; and end voltage: 3.0 V.

In the positive electrode using positive electrode active material C, the thickness of the positive electrode, namely, the total thickness of the current collector and the positive electrode active material layer, was 85 $\mu$m, and the positive electrode capacity per unit area was 3.75 mAh/cm$^2$. This positive electrode capacity was a capacity in the case where lithium metal was used for the negative electrode and constant-current charge/discharge was conducted under conditions of charge current value: 0.1 mA/cm$^2$; end voltage: 4.25 V; discharge current value: 0.1 mA/cm$^2$; and end voltage: 3.0 V.

(Production of the negative electrode)

$SiO_{0.25}$ was used as the negative electrode active material to produce a negative electrode substantially the same as the evaluation negative electrode used for evaluating the correlation among the negative electrode utilization factor, the negative electrode deterioration ratio and the adhesion strength of the negative electrode active material.

On this negative electrode, Li corresponding to 1.5 mAh/cm$^2$ was vapor-deposited by the following method. The irreversible capacity of this negative electrode is 1.0 mAh/cm$^2$.

The vapor deposition of lithium metal was performed in an argon atmosphere by a resistive heating vapor deposition device (produced by ULVAC, Inc.) First, lithium metal was put into a boat of tantalum in the resistive heating vapor deposition device. Next, the negative electrode was fixed such that one of negative electrode active material layers formed on both surfaces of the negative electrode current collector would face the boat of tantalum. Then, in the argon atmosphere, a 50 A current was caused to flow through the boat of tantalum to vapor-deposit lithium metal.

Next, the negative electrode capacity was measured under the following conditions.

<Conditions for measuring the negative electrode capacity>

Constant-current charge: 0.8 mA/cm$^2$; end voltage: 0 V; pause time: 30 minutes
Constant-current charge: 0.4 mA/cm$^2$; end voltage: 0 V; pause time: 30 minutes
Constant-current charge: 0.08 mA/cm$^2$; end voltage: 0 V; pause time: 30 minutes
Constant-current discharge: 0.8 mA/cm$^2$; end voltage: 1.5 V; pause time: 30 minutes

The negative electrode capacity was 6.0 mAh/cm$^2$.

(Production of a battery)

The positive electrode and the negative electrode in this example were used to produce a lithium secondary battery in substantially the same method as in Example 1. This battery exhibits the potential behavior described above with reference to FIG. **7**.

(Evaluation on the charge/discharge cycle characteristic)

The battery capacity of the battery in this example was evaluated under the following conditions. The ratio of the battery capacity with respect to the negative electrode capacity (negative electrode utilization factor in an initial stage of the cycle repetition; hereinafter, referred to as the "initial negative electrode utilization factor") was found and shown in Table 4.

<Evaluation conditions on the battery capacity>

Constant-current charge: 10 mA/cm$^2$; end voltage: 4.15 V
Constant-voltage charge: end current: 0.75 mA; pause time: 20 minutes
Constant-current discharge: 3.0 mA; end voltage: 2.5 V; pause time: 20 minutes

A charge/discharge cycle test was performed under the following conditions.

<Evaluation conditions on the charge/discharge cycle characteristic>

Constant-current charge: 10 mA/cm$^2$; end voltage: 4.15 V
Constant-voltage charge: end current: 0.75 mA; pause time: 20 minutes
Constant-current discharge: 15 mA; end voltage (as shown in Table 4); pause time: 20 minutes

Test temperature: 25°C

After repeating the charge/discharge under the above conditions 350 times, the discharge capacity after a prescribed number of cycles was divided by the battery capacity and the resultant value was set as the "capacity retention ratio (%)". The obtained capacity retention ratios are shown in Table 5.

After a prescribed number of cycles, the battery was disassembled, and the positive electrode and the negative electrode were taken out. The positive electrode and the negative electrode were washed well with dimethyl carbonate and then dried. Lithium metal was used as a counter electrode, and the separator and the electrolyte solution were replaced. The remaining capacity of each of the positive electrode and the negative electrode was measured under the same conditions used for evaluating the positive electrode capacity and the negative electrode capacity in the initial state. The remaining capacities were respectively divided by the positive electrode capacity and the negative electrode capacity in the initial state and the resultant values were set as the capacity retention ratios (%) of the respective electrodes. The results are shown in Table 5.

[Table 4]

| Test No. | Positive electrode active material | Battery capacity (mAh/cm$^2$) | Positive electrode capacity (mAh/cm$^2$) | Negative electrode capacity (mAh/cm$^2$) | Initial negative electrode utilization factor (%) | Discharge end voltage of cell (V) | Positive electrode discharge end potential (V) |
|---|---|---|---|---|---|---|---|
| ii-1 | A | 3.8 | 3.8 | 6.2 | 61 | 2.2 | 2.65 |
| ii-2 | A | 3.9 | 3.8 | 6.2 | 61 | 1.7 | 2.15 |
| ii-3 | A | 3.9 | 3.8 | 6.2 | 63 | 1.4 | 1.85 |
| ii-4 | A | 4.8 | 4.7 | 6.2 | 77 | 1.4 | 1.95 |
| ii-5 | C | 3.9 | 3.8 | 6.2 | 63 | 1.4 | 1.85 |
| Compara-tive ex. 1 | A | 3.8 | 3.8 | 6.2 | 61 | 2.5 | 2.95 |
| Compara-tive ex. 2 | A | 4.7 | 4.7 | 6.2 | 76 | 2.5 | 2.85 |
| Compara-tive ex. 3 | C | 3.8 | 3.8 | 6.2 | 61 | 2.5 | 2.95 |

[Table 5]

| | Battery capacity retention ratio after 350th cycle (%) | Capacity retention ratio of positive electrode (%) | Capacity retention ratio of negative electrode (%) | Li deposited/ not deposited |
|---|---|---|---|---|
| ii-1 | 60 | 60 | 80 | Not deposited |
| ii-2 | 53 | 53 | 87 | Not deposited |
| ii-3 | 46 | 46 | 95 | Not deposited |
| ii-4 | 46 | 46 | 75 | Not deposited |
| ii-5 | 77 | 77 | 96 | Not deposited |
| Comparative ex. 1 | 33 | 81 | 33 | Deposited |
| Comparative ex. 2 | 5 | 90 | 5 | Deposited |
| Comparative ex. 3 | 32 | 82 | 32 | Deposited |

From these results, the following was found. In Comparative Examples 1 through 3 in which the positive electrode discharge end potential is equal to or higher than 2.7 V, the battery capacity after the 350th cycle is regulated by the negative electrode capacity (battery capacity = negative electrode capacity), and the decrease ratio of the battery capacity is rapidly increased. By contrast, when the positive electrode discharge end potential is suppressed to be lower than 2.7 V (tests ii-1 through ii-5), the decrease in the negative electrode capacity is suppressed. Therefore, even after the 350th cycle, the battery capacity = positive electrode capacity. As the positive electrode discharge end potential is lower, the decrease in the negative electrode capacity can be more suppressed, but the decrease in the positive electrode capacity is increased. As can be seen from the above results, the positive electrode discharge end potential is preferably equal to or higher than 2.0 V (tests ii-1 and ii-2). In this case, the deterioration of the negative electrode is suppressed while the decrease in the positive electrode capacity is suppressed to a certain degree. Thus, the capacity retention ratio of the battery after the 350th cycle can be equal to or higher than 50%.

FIG. **14** shows a change in the capacity retention ratio of the battery with respect to the charge/discharge cycles in the battery used in test ii-4 and the battery in Comparative Example 1. As can be seen from FIG. **14,** in Comparative Example 1, the decrease ratio (gradient of the curve) of the battery capacity until about the 250th cycle is exceeded by the decrease ratio of the battery capacity after the 250th cycle. As shown in Table 5, until about the 250th cycle, the negative electrode capacity is larger than the positive electrode capacity, and thus the battery capacity = positive electrode capacity (i.e., battery capacity retention ratio = capacity retention ratio of the positive electrode). After the 250th cycles, the negative electrode capacity is smaller than the positive electrode capacity, and thus battery capacity = negative electrode capacity. This is a presumable reason why in Comparative Example 1, after, for example, the 250th cycle, battery capacity is rapidly decreased in accordance with the decrease in the negative electrode capacity.

By contrast, in the battery of test ii-4, the negative electrode capacity is always larger than the positive electrode capacity, namely, battery capacity = positive electrode capacity, during the charge/discharge cycle test. During this time period, as the positive electrode capacity is decreased, the negative electrode utilization factor is gradually suppressed. As described above, when the negative electrode utilization factor is lower, the reversibility of the negative electrode capacity is increased in an exponential manner. Therefore, as the cycle repetition proceeds, the decrease ratio of the negative electrode capacity can be suppressed to be smaller. It is also confirmed from the results shown in Tables 4 and 5 that the above-described effect is provided regardless of the type of the positive electrode active material or the negative electrode utilization factor in an initial stage of the cycle repetition (initial negative electrode utilization factor). It was found that when, for example, the initial negative electrode utilization factor is high (e.g., 77%) also, no rapid decrease in the battery capacity is observed even after the 350th cycle.

<Example 3>

In this example, a charge/discharge cycle test was performed while the positive electrode discharge end potential was switched. A test method and results will be described.

A battery having the same structure as that of the lithium secondary battery used in test ii-1 in Example 2 was used as the evaluation cell.

<Charge/discharge cycle characteristic evaluation test iii-1>

As described below, in evaluation test iii-1, the discharge end voltage was set to 2.5 V until the 150th cycle and to 1.4 V after the 151th cycle until the 350th cycle.

(1st through 150th cycles)

Constant-current charge: 10 mA/cm$^2$; end voltage: 4.15 V
Constant-voltage charge: end current: 0.75 mA/cm$^2$; pause time: 20 minutes
Constant-current discharge: 15 mA/cm$^2$; end voltage: 2.5 V; pause time: 20 minutes
Test temperature: 25°C
(151st through 350th cycles)
Constant-current charge: 10 mA/cm$^2$; end voltage: 4.15 V
Constant-voltage charge: end current: 0.75 mA/cm$^2$; pause time: 20 minutes
Constant-current discharge: 15 mA/cm$^2$; end voltage: 1.4 V; pause time: 20 minutes
Test temperature: 25°C

In test iii-1, the positive electrode discharge end potential was 2.95 V during the 1st through 150th cycles, and was 1.85 V during the 150th through 350th cycles.

<Charge/discharge cycle characteristic evaluation test iii-2>

Next, in evaluation test iii-2, the discharge end voltage was set to 1.4 V until the 150th cycle and to 2.5 V after the 151st cycle until the 350th cycle.

(1st through 150th cycles)

Constant-current charge : 10 mA/cm$^2$; end voltage: 4.15 V
Constant-voltage charge: end current: 0.75 mA/cm$^2$; pause time: 20 minutes
Constant-current discharge: 15 mA/cm$^2$; end voltage: 1.4 V; pause time: 20 minutes
Test temperature: 25°C

(151st through 350th cycles)

Constant-current charge: 10 mA/cm$^2$; end voltage: 4.15 V
Constant-voltage charge: end current: 0.75 mA/cm$^2$; pause time: 20 minutes
Constant-current discharge: 15 mA/cm$^2$; end voltage: 2.5 V; pause time: 20 minutes
Test temperature: 25°C

In test iii-2, the positive electrode discharge end potential was 1.85 V during the 1st through 150th cycles, and was 2.95 V during the 101st through 350th cycles.

The evaluation results on the charge/discharge cycle characteristic under each of the evaluation conditions are shown in Table 6.

[Table 6]

| Evaluation condition | Battery capacity retention ratio after 350th cycle (%) | Capacity retention ratio of positive electrode (%) | Capacity retention ratio of negative electrode (%) | Li deposited/not deposited |
|---|---|---|---|---|
| iii-1 | 63 | 63 | 78 | Not deposited |
| iii-2 | 58 | 58 | 82 | Not deposited |

(Evaluation test iii-1: the positive electrode discharge end potential is decreased after the 150th cycles)

Until the 150th cycles, the positive electrode discharge end potential was equal to or higher than 2.7 V, and the deterioration of the positive electrode was small, namely, the decrease ratio of the positive electrode capacity (= decrease ratio of the battery capacity) was small. After this, when the positive electrode discharge end potential was set to be lower than 2.7 V, the decrease ratio of the positive electrode capacity became larger than the decrease ratio thereof until the 150th cycle. Therefore, the negative electrode utilization factor was gradually and forcibly decreased as the cycle repetition proceeded. Thus, the deterioration in the negative electrode was suppressed, and the negative electrode active material was suppressed from being peeled off. As a result, lithium in the negative electrode was not deposited, which further improved the safety.

It was found as described above that when the charge/discharge is performed with a positive electrode discharge end potential of lower than 2.7 V in a late stage of the cycle repetition, the negative electrode capacity is kept larger than the positive electrode capacity even after the 350th cycle, and thus a high charge/discharge cycle characteristic is provided. As compared with the charge/discharge method in test ii-1 in Example 2, the battery capacity in an initial stage of the cycle repetition is larger in test iii-1. Therefore, in order to provide a large battery capacity in an initial stage of the cycle repetition with certainty, the charge/discharge method in test iii-1 is advantageous. When the charge/discharge is performed only with a discharge end potential of lower than 2.7 V, the initial capacity is large, but a sufficiently high charge/discharge cycle characteristic is not provided because the positive electrode is deteriorated significantly as the charge/discharge cycle repetition proceeds.

(Evaluation test iii-2: the positive electrode discharge end potential is increased after the 150th cycles)

Until the 150th cycles, the positive electrode discharge end potential was lower than 2.7 V, and therefore the gradient of the deterioration of the positive electrode (decrease ratio in the positive electrode capacity) was large. For this reason, even when the charge/discharge was performed after this with a positive electrode discharge end potential of equal to or higher than 2.7 V to suppress the deterioration of the positive electrode, the decrease ratio of the negative electrode capacity was changed while being low. As a result, even after the 350th cycles, the negative electrode capacity was kept larger than the positive electrode capacity, and lithium was not deposited.

It was found as described above that when the charge/discharge is performed with a positive electrode discharge end potential of lower than 2.7 V in an early stage of the cycle repetition, the negative electrode capacity is kept larger than the positive electrode capacity even after the 350th cycle, and thus a high charge/discharge cycle characteristic is provided. As compared with the charge/discharge method in test ii-1 in Example 2, the capacity retention ratio of the negative electrode after the 350th cycle is improved in test iii-2, and thus the number of cycles until the battery capacity is rapidly decreased can be increased. Accordingly, such a charge/discharge method is advantageous depending on the application of the battery.

As can be seen, in whichever pattern the discharge end potential is switched, the deterioration of the negative electrode can be effectively suppressed while the charge/discharge cycle characteristic of the battery is maintained. Therefore, the Li deposition in the negative electrode can be suppressed, and thus the safety after the charge/discharge cycles can be improved.

There is no specific limitation on the timing to switch the discharge end potential. For example, the discharge end potential may be switched while the capacity retention ratio of the battery is 60 to 70% (or while the number of the cycles is 100 to 200, or while the negative electrode utilization factor is 30 to 70%).

## INDUSTRIAL APPLICABILITY

A lithium secondary battery according to the present invention is usable for substantially the same applications as a conventional lithium secondary battery, and is especially useful as a power supply of mobile electronic devices such as personal computers, mobile phones, mobile devices, personal digital assistants (PDAs), portable game machines, camcorders and the like. A lithium secondary battery according to the present invention is also expected to be usable as, for example, a secondary battery for assisting an electric motor of hybrid electric vehicles, fuel cell vehicles and the like; a driving power supply of electric tools, vacuum cleaners, robots and the like; and a power source of plug-in HEVs.

## REFERENCE SIGNS LIST

| | |
|---|---|
| **1** | Battery case |
| **2** | Sealing plate |
| **3** | Insulating packing |
| **4** | Electrode group |
| **5, 5a** | Positive electrode, positive electrode lead |
| **6, 6a** | Negative electrode, negative electrode lead |
| **7** | Separator |
| **8** | Insulation ring (insulation plate) |
| **11** | Positive electrode |
| **11a** | Positive electrode current collector |
| **11b** | Positive electrode active material |
| **12** | Negative electrode |
| **12a** | Negative electrode current collector |
| **12b** | Negative electrode active material |
| **13** | Separator |
| **14** | Positive electrode lead |
| **15** | Negative electrode lead |
| **16** | Gasket |
| **17** | Outer case |
| **21** | Negative electrode current collector |
| **24** | Active material body |

| 50 | Electron beam vapor deposition device |
|----|----|
| 51 | Chamber |
| 52 | First pipe |
| 53 | Fixing table |
| 54 | Nozzle |
| 55 | Target |
| 56 | Power supply |

**Claims**

1. A charge/discharge method for a lithium secondary battery, the lithium secondary battery comprising:

   a positive electrode containing a positive electrode active material capable of occluding/releasing lithium ions;
   a negative electrode containing a negative electrode active material capable of occluding/releasing lithium ions;
   a separator located between the positive electrode and the negative electrode; and
   an electrolyte having a lithium ion conductivity;
   wherein:

   the positive electrode active material contains a lithium-containing transition metal oxide; and
   a reversible capacity of the negative electrode is larger than a usable capacity of the positive electrode;
   the charge/discharge method comprising first charge/discharge by which the positive electrode in a charged state is discharged until having a first potential VDp1, which is lower than 2.7 V on a lithium metal basis, and the discharge is finished at this point.

2. The charge/discharge method for a lithium secondary battery according to claim 1, wherein the negative electrode active material has lithium occluded thereto in advance.

3. The charge/discharge method for a lithium secondary battery according to claim 1 or 2, wherein the lithium-containing transition metal oxide is a nickel-based lithium-containing complex oxide.

4. The charge/discharge method for a lithium secondary battery according to claim 3, wherein the nickel-based lithium-containing complex oxide has a composition represented by $Li_aNi_{1-(b+c)}Co_bM_cO_2$ (where $1.0 \leq a \leq 1.05$, $0.1 \leq b \leq 0.35$, $0.005 \leq c \leq 0.30$, and M is at least one selected from Al, Sr and Ca).

5. The charge/discharge method for a lithium secondary battery according to any one of claims 1 through 4, wherein the negative electrode active material contains graphite.

6. The charge/discharge method for a lithium secondary battery according to any one of claims 1 through 4, wherein the negative electrode active material contains silicon.

7. The charge/discharge method for a lithium secondary battery according to any one of claims 1 through 6, wherein in a completely discharged state of the lithium secondary battery at an environment temperature of 25°C, a releasable amount of lithium in the negative electrode is larger than an irreversible capacity of the lithium secondary battery.

8. The charge/discharge method for a lithium secondary battery according to any one of claims 1 through 7, wherein the first potential VDp1 is equal to or higher than 1.8 V.

9. The charge/discharge method for a lithium secondary battery according to claim 8, wherein the first potential VDp1 is equal to or higher than 2.0 V and equal to or lower than 2.5 V.

10. The charge/discharge method for a lithium secondary battery according to any one of claims 1 through 9, wherein the first charge/discharge and second charge/discharge, by which the positive electrode in a charged state is discharged until having a second potential VDp2 higher than the first potential VDp1 and the discharge is finished at this point, are switchable.

11. The charge/discharge method for a lithium secondary battery according to claims 10, wherein until a prescribed number of cycles of charge/discharge are performed, the second charge/discharge is performed a larger number of times than the first charge/discharge, and after the number of cycles of charge/discharge exceeds the prescribed number, the first charge/discharge is performed a larger number of times than the second charge/discharge.

12. The charge/discharge method for a lithium secondary battery according to claims 10, wherein until a prescribed number of cycles of charge/discharge are performed, the first charge/discharge is performed a larger number of times than the second charge/discharge, and after the number of cycles of charge/discharge exceeds the prescribed number, the second charge/discharge is performed a larger number of times than the first charge/discharge.

13. The charge/discharge method for a lithium secondary battery according to any one of claims 1 through 12, wherein:

the lithium secondary battery further comprises a reference electrode;
the charge/discharge method comprising the steps of:

sensing that the potential of the positive electrode on a lithium metal basis, which is detected based on a potential difference between the reference electrode and the positive electrode, has been decreased to the first potential VDp1 during discharge in the first charge/discharge, and
finishing the discharge when the potential of the positive electrode is detected to have been decreased to the first potential VDp1.

14. A charge/discharge system for a lithium secondary battery, the charge/discharge system comprising:

the lithium secondary battery including a positive electrode containing a positive electrode active material capable of occluding/releasing lithium ions, a negative electrode containing a negative electrode active material capable of occluding/releasing lithium ions, a separator located between the positive electrode and the negative electrode, and an electrolyte having a lithium ion conductivity;
a charge control section for controlling charge of the lithium secondary battery;
a discharge control section for controlling discharge of the lithium secondary battery; and
a voltage measurement section for sensing a battery voltage while the lithium secondary battery is discharged;
wherein:

the positive electrode active material contains a lithium-containing transition metal oxide;
a reversible capacity of the negative electrode is larger than a usable capacity of the positive electrode;
the discharge control section performs control such that when the battery voltage during discharge which is measured by the voltage measurement section reaches a predetermined threshold voltage, power supply from the lithium secondary battery to a load is stopped to finish the discharge; and
the threshold voltage at which the discharge is finished is set to a first threshold voltage at which a discharge potential of the positive electrode on a lithium metal basis is lower than 2.7 V.

15. The charge/discharge system of claim 14, further comprising threshold voltage switching means for switching a threshold voltage at which the discharge is finished,
wherein the threshold voltage switching means is capable of switching the threshold voltage at which the discharge is finished between the first threshold voltage and a second threshold voltage higher than the first threshold voltage.

16. An electronic device, comprising the charge/discharge system of claim 14 or 15.

17. A battery pack, comprising the charge/discharge system of claim 14 or 15.

*FIG.1*

## FIG.2

<u>50</u>

*FIG.3*

$$y = 0.0004e^{0.0774x}$$
$$R^2 = 0.9733$$

NEGATIVE ELECTRODE UTILIZATION FACTOR (%)

*FIG.4*

$$y = -18.876x + 24.553$$
$$R^2 = 0.9943$$

DETERIORATION RATIO (%)

*FIG.5*

FIG.6

*FIG.7*

*FIG.8*

*FIG.9*

x VALUE in $Li_xNi_{0.815}Co_{0.15}Al_{0.035}O_2$

*FIG.10*

x VALUE in $Li_xNi_{1/3}Mn_{1/3}Co_{1/3}O_2$

FIG.11

*FIG.12*

(a)

(b)

(c)

## FIG.13

## FIG.14

*FIG.15*

| INTERNATIONAL SEARCH REPORT | International application No. |
|---|---|
| | PCT/JP2012/000182 |

A.  CLASSIFICATION OF SUBJECT MATTER
*H01M10/44*(2006.01)i, *H01M4/525*(2010.01)i, *H01M10/052*(2010.01)i

According to International Patent Classification (IPC) or to both national classification and IPC

B.  FIELDS SEARCHED

Minimum documentation searched (classification system followed by classification symbols)
H01M10/44, H01M4/525, H01M10/052

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | US 2004/0241534 A1  (MATSUSHITA ELECTRIC INDUSTRIAL CO., LTD.), 02 December 2004 (02.12.2004), & CN 1574448 A        & JP 2005-19385 A & JP 4472415 B2        & US 7071653 B2 | 1-17 |
| A | WO 2006/109495 A1  (MATSUSHITA ELECTRIC INDUSTRIAL CO., LTD.), 19 October 2006 (19.10.2006), & CN 101160685 A        & JP 2006-294469 A & JP 4794893 B2        & KR 10-2007-0110119 A & US 2008/0118837 A1 | 1-17 |
| A | JP 11-204148 A  (NEC Corp.), 30 July 1999 (30.07.1999), & JP 2949705 B2 | 1-17 |

| ☒  Further documents are listed in the continuation of Box C. | | ☐  See patent family annex. |
|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 April, 2012 (05.04.12) | 17 April, 2012 (17.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/000182 |

C (Continuation).　　DOCUMENTS CONSIDERED TO BE RELEVANT

| Category* | Citation of document, with indication, where appropriate, of the relevant passages | Relevant to claim No. |
|---|---|---|
| A | JP 8-213015 A　(Sony Corp.),<br>20 August 1996 (20.08.1996),<br>(Family: none) | 1-17 |
| P,A | WO 2011/033781 A1　(PANASONIC CORP.),<br>24 March 2011 (24.03.2011),<br>(Family: none) | 1-17 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8213015 A

- WO 01031722 A

**Non-patent literature cited in the description**

- *Journal of Power Sources,* 1995, vol. 54, 209-213